(19) **Europäisches Patentamt / European Patent Office / Office européen des brevets**

(11) **EP 2 468 838 B1**

(12) **FASCICULE DE BREVET EUROPEEN**

(45) Date de publication et mention
de la délivrance du brevet:
**24.07.2019 Bulletin 2019/30**

(21) Numéro de dépôt: **11290528.6**

(22) Date de dépôt: **17.11.2011**

(51) Int Cl.:
*C10G 3/00* (2006.01)  *C10G 45/60* (2006.01)
*B01J 8/04* (2006.01)  *C10G 65/04* (2006.01)
*C10L 1/04* (2006.01)  *C10L 1/06* (2006.01)
*C10L 1/08* (2006.01)

(54) **PRODUCTION DE CARBURANTS PARAFFINIQUES À PARTIR DE MATIÈRES RENOUVELABLES PAR UN PROCÉDÉ D'HYDROTRAITEMENT EN CONTINU**

HERSTELLUNG VON PARAFFINHALTIGEN BRENNSTOFFEN AUS ERNEUERBAREN MATERIALIEN MIT HILFE EINES KONTINUIERLICHEN WASSERSTOFFBEHANDLUNGSVERFAHRENS

PRODUCTION OF PARAFFIN FUELS USING RENEWABLE MATERIALS BY A CONTINUOUS HYDROGEN-TREATMENT METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2010 FR 1005027**

(43) Date de publication de la demande:
**27.06.2012 Bulletin 2012/26**

(73) Titulaire: **IFP Energies nouvelles**
**92500 Rueil-Malmaison (FR)**

(72) Inventeurs:
• **Dupassieux, Nathalie**
**69005 Lyon (FR)**
• **Chapus, Thierry**
**69001 Lyon (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**EP-A1- 1 741 768**  **EP-A1- 2 226 375**
**US-A1- 2009 318 737**

**Description**

L'invention concerne un procédé pour la production d'hydrocarbures paraffiniques utilisables comme carburants à partir de matières renouvelables telles que les huiles et graisses d'origine végétale ou animale.

Le contexte international actuel est marqué d'abord par la croissance rapide en besoin de carburants, en particulier de bases gazoles et kérosènes et ensuite par l'importance des problématiques liées au réchauffement planétaire et l'émission de gaz à effet de serre. Il en résulte une volonté de réduire la dépendance énergétique vis à vis des matières premières d'origine fossile et de réduction des émissions de $CO_2$. Dans ce contexte, la recherche de nouvelles charges issues de sources renouvelables constitue un enjeu d'une importance croissante. Parmi ces charges, on peut citer par exemple les huiles végétales (alimentaires ou non) ou issues d'algues et les graisses animales.

Ces charges sont principalement composées de triglycérides et d'acides gras libres, ces molécules comprenant des chaînes hydrocarbonées d'acides gras avec un nombre d'atomes de carbone compris entre 4 et 24, et un nombre d'insaturations généralement compris entre 0 et 3, avec des valeurs plus élevées pour les huiles d'algues par exemple. Les charges renouvelables contiennent des impuretés comme des composés azotés, et des métaux présents sous forme de phospholipides contenant des éléments comme le phosphore, le calcium, le magnésium, le potassium et le sodium.

La masse moléculaire très élevée (>600g/mol) des triglycérides et la viscosité élevée des charges considérées font que leur utilisation directe ou en mélange dans les bases carburants posent des difficultés pour les moteurs modernes. Cependant, les chaînes hydrocarbonées qui constituent les triglycérides sont essentiellement linéaires et leur longueur (nombre d'atomes de carbone) est compatible avec les hydrocarbures présents dans les bases carburants.

Il est donc nécessaire de transformer ces charges pour obtenir des bases carburants (y compris le diesel et le kérosène) de bonne qualité répondant notamment aux spécifications directement ou après mélange avec d'autres coupes issues de pétrole brut. Le diesel doit répondre à la spécification EN590 et le kérosène doit satisfaire aux exigences décrites dans le « International Air Transport Association matériel (IA-TA) Guidance Material for Aviation Turbine Fuel Spécifications » comme ASTM D1655.

Une approche possible est la transformation catalytique de triglycérides en carburant paraffinique désoxygéné en présence d'hydrogène (hydrotraitement).

Lors de l'hydrotraitement les réactions subies par la charge contenant les triglycérides sont les suivantes:

- la réaction d'hydrogénation des insaturations des chaînes hydrocarbonées des acides gras des triglycérides et esters,
- les réactions de désoxygénations selon deux voies réactionnelles :

    o l'hydrodésoxygénation (HDO) conduisant à la formation d'eau par consommation d'hydrogène et à la formation d'hydrocarbures de nombre de carbone ($C_n$) égal à celui des chaînes d'acides gras initiales,
    o la décarboxylation/décarbonylation conduisant à la formation d'oxydes de carbone (monoxyde et dioxyde de carbone : CO et $CO_2$) et à la formation d'hydrocarbures comptant un carbone en moins ($C_{n-1}$) par rapport aux chaînes d'acides gras initiales,

- les réactions d'hydrodéazotation (HDN), par laquelle on désigne les réactions permettant d'enlever l'azote de la charge avec la production de $NH_3$.

L'hydrogénation des insaturations des chaînes hydrocarbonées (double liaisons carbone-carbone) est fortement exothermique et l'augmentation de température provoquée par le dégagement de chaleur peut conduire à des niveaux de température où la part des réactions de décarboxylation devient significative. Les réactions d'hydrodésoxygénation, y compris les réactions de décarboxylation, sont également des réactions exothermiques. L'hydrodésoxygénation est généralement favorisée à plus basse température par rapport à la décarboxylation/décarbonylation. Les réactions d'hydrodéazotation sont plus difficiles et nécessitent des températures supérieures à l'hydrogénation et l'hydrodésoxygénation. L'hydrodéazotation est généralement nécessaire, car les composés azotés sont généralement des inhibiteurs de catalyseurs d'hydroisomérisation qui sont optionnellement utilisés après l'hydrotraitement. L'hydroisomérisation permet d'améliorer les propriétés à froid des bases carburants après l'hydrotraitement, notamment lorsque la production de kérosène est visée.

**Etat de l'art**

Par conséquent, un contrôle strict de la température dans la section hydrotraitement est nécessaire, une température trop élevée présente les inconvénients de favoriser les réactions secondaires indésirables comme la polymérisation, le craquage, le dépôt de coke et la désactivation du catalyseur.

Ainsi, le document EP 1 741 768 qui décrit un procédé d'hydrotraitement d'huile végétale qui contient plus de 5% en poids d'acides gras libres, ce qui crée des réactions indésirables. Afin d'atténuer ce problème, il est proposé de soumettre ce type de matières premières à un hydrotraitement catalytique à une température entre 200 et 400°C en présence d'un agent diluant, le ratio d'agent diluant à la charge fraîche étant dans la plage de 5 à 30 en poids. L'agent diluant est de préférence un produit recyclé issu du procédé.

Toutefois, le procédé proposé dans le document EP 1 741 768 A1 a encore les inconvénients suivants :

- La quantité de recycle pour fournir la quantité nécessaire d'agent diluant est très élevée. Ceci présente une forte charge hydraulique en aval du réacteur et nécessite une transformation considérable des unités existantes afin d'adapter les dimensions nécessaires du réacteur.
- La consommation d'hydrogène est réduite par la promotion de la désoxygénation par des réactions de décarboxylation (formation de CO et de $CO_2$) grâce à une sélection appropriée du catalyseur d'hydrotraitement. Toutefois, la désoxygénation des triglycérides par décarboxylation mène à une perte importante du rendement en paraffines, une perte de l'activité du catalyseur en raison de l'effet inhibiteur du CO et une corrosion augmentée en raison de la présence du $CO_2$.

Le document US 2009/0318737 décrit un procédé pour produire des carburants (diesel) issus de matières premières renouvelables telles que les huiles et graisses d'origine végétale et animale. Le procédé consiste à traiter une première partie d'une matière première renouvelable par hydrogénation et par désoxygénation dans une première zone de réaction et une seconde partie d'une matière première renouvelable par hydrogénation et par désoxygénation dans une seconde zone de réaction. Une partie du produit d'hydrocarbure est recyclée à la première zone de réaction pour augmenter la solubilité hydrogène du mélange réactionnel en utilisant un ratio recycle à la première partie de matières premières renouvelables compris entre 2 et 8 en volume (ratio massique entre 1.7 et 6.9). Le fait de maximiser la quantité d'hydrogène dans la phase liquide permet de réduire le taux de désactivation du catalyseur, ce qui permet de réduire la pression, de favoriser les réactions de décarboxylation/décarbonylation et de réduire les réactions d'hydrodésoxygénation, et donc de réduire la consommation d'hydrogène. Aucune information n'est donnée quant à la quantité d'azote dans les matières premières et les effluents paraffiniques.

Le demande EP 2 226 375 propose un procédé d'hydrogénation en continu d'une charge issue de sources renouvelables contenant des triglycérides dans un système de réacteur à lit fixe ayant plusieurs lits catalytiques disposés en série et comprenant un catalyseur d'hydrogénation en utilisant moins de recycle et requérant par conséquent une transformation limitée des unités existantes. La charge est introduite par une injection étagée de façon que les différents lits catalytiques reçoivent de plus en plus de charge dans le sens de l'écoulement. Le liquide recyclé n'est ajouté qu'à la première zone catalytique. Cette limitation de la quantité de produit recyclé dans le réacteur permet de limiter le débit total dans le réacteur, puis la charge hydraulique en aval du réacteur. La plage préférée de recycle au total de la charge fraiche est inférieur à 1, et de préférence inférieur à 0,5 en poids. Le rapport de diluant sur charge fraîche entrant à chaque lit catalytique est inférieur ou égal à 4 en poids. La température d'entrée est identique pour chaque lit.

La demande EP 2 226 375 privilégie la voie hydrodésoxygénation par élimination de l'oxygène et la formation de l'eau, plutôt que l'élimination de l'oxygène par des réactions de décarboxylation. Afin de gérer le problème des composes azotés pour protéger les catalyseurs d'une hydroisomérisation, le document EP 2 226 375 préconise la possibilité d'un deuxième réacteur effectuant l'hydrodéazotation après le réacteur d'hydrotraitement. Ce réacteur opère à des températures plus élevées que celui de l'hydrotraitement, les températures de l'hydrotraitement n'étant pas assez élevées pour effectuer l'hydrodéazotation.

La demanderesse a observé que la teneur en azote dans la matière première renouvelable peut varier considérablement en fonction de l'origine de la matière. En particulier, la teneur en azote est généralement plus élevée dans les graisses animales que dans les huiles végétales. En outre, le réglage de température dans les différentes zones catalytiques du réacteur d'hydrotraitement à des niveaux aussi bas que possible, afin de favoriser les réactions d'hydrodésoxygénation conduisant à la formation d'eau, peut entraîner des difficultés pour atteindre des niveaux faibles de la teneur en azote dans le combustible paraffinique produit après hydrotraitement. Ainsi, il est bien connu que les réactions hydrodéazotation (HDN) sont plus difficiles à réaliser que les réactions d'hydrodésulfuration (HDS) ou des réactions d'hydrodésoxygénation (HDO), et nécessitent par conséquent des températures plus élevées pour atteindre le même niveau. Une teneur trop élevée en composés azotés dans le carburant paraffinique produit par le procédé d'hydrotraitement provoque une moins bonne performance dans l'hydroisomérisation optionnelle en aval. L'hydroisomérisation (HIS) peut être avantageuse pour produire du diesel avec des propriétés d'écoulement à froid améliorée et/ou pour produire du kérosène répondant aux spécifications en point de disparition des cristaux (freezing point selon le terme anglo-saxon). Afin de compenser cet effet, il serait alors nécessaire d'augmenter la sévérité de la section HIS, conduisant à un rendement plus faible en produits de valeur comme le carburant diesel et le kérosène, et à un cycle réduit, et par conséquent à une augmentation des coûts d'exploitation.

**Objet de l'invention**

L'objectif de la présente invention est alors de proposer un procédé d'hydrotraitement de charges renouvelables permettant de favoriser majoritairement les réactions d'hydrodésoxygénation par la formation d'eau tout en effectuant efficacernent par ce même procédé l'hydrodéazotation nécessaire pour préserver l'activité catalytique de la section d'hydroisomérisation optionnelle.

Ainsi, la présente invention concerne un procédé tel que défini dans la revendication 1.

Un intérêt de la présente invention est de pouvoir effectuer l'hydrodéazotation et l'hydrodésoxygénation dans une même zone catalytique sans faire appel à un deuxième réacteur d'hydrodéazotation en aval. En effet, l'introduction de la charge en proportions croissantes couplé avec un recycle important sur la première zone, permet d'atteindre par un profil montant de températures, une zone suffisamment chaude en fin de zone catalytique pour permettre l'hydrodéazotation tout en maintenant la température suffisamment basse à l'entrée de la zone catalytique pour favoriser les réactions d'hydrodésoxygénation.

Un autre intérêt de la présente invention consiste à privilégier la voie hydrodésoxygénation par élimination de l'oxygène et la formation de l'eau, plutôt que l'élimination de l'oxygène par des réactions de décarboxylation par le contrôle des températures adaptée à l'hydrodésoxygénation en entrée de chaque zone catalytique. Les avantages apportés par cette solution sont une augmentation du rendement des hydrocarbures paraffiniques, et la réduction de la quantité du $CO/CO_2$ formé, ce qui permet de limiter l'effet inhibiteur du CO sur l'activité du catalyseur d'hydrotraitement. Le fait de privilégier la voie hydrodésoxygénation permet également de réduire la corrosion due à la présence de $CO_2$ dans le réacteur.

Un autre intérêt de la présente invention est la limitation de la quantité de produit recyclé dans le réacteur ce qui permet de limiter le débit total dans le réacteur, puis la charge hydraulique en aval du réacteur.

**Description**

Le procédé selon la présente invention consiste à convertir en hydrocarbures paraffiniques, et plus précisément en distillats moyens (kérosènes et/ou gazoles), une large gamme de charges d'origine renouvelable, essentiellement composées de triglycérides et d'acides gras. Ces charges sont généralement caractérisées par une masse molaire élevée (supérieure à 800 g/mole le plus souvent), et les chaînes d'acides gras qui les composent ont un nombre d'atomes de carbone compris entre 4 et 24, et un nombre d'insaturations par chaîne généralement compris entre 0 et 3, avec des valeurs supérieures qui peuvent être atteintes sur certaines charges spécifiques. Parmi les charges qui peuvent être converties par le procédé selon la présente invention, on peut citer, cette liste n'étant pas exhaustive : les huiles végétales telles que les huiles de colza, de jatropha, de soja, de palme, de tournesol, d'olive, de coprah, de camelina, des huiles de poisson ou des huiles algales hétérotrophes ou autotrophes, ou encore des graisses animales telles que le suif de boeuf, ou encore des résidus issus de l'industrie papetière (tels que le "tall oil"), ou des mélanges de ces diverses charges.

De préférence les charges issues de sources renouvelables sont choisies parmi les huiles et graisses d'origine végétale ou animale, ou des mélanges de telles charges, contenant des triglycérides et/ou des acides gras libres et/ou des esters.

Les différents flux partiels de charge sont de nature identique ou différente. Un avantage du procédé selon l'invention consiste dans sa grande flexibilité, selon l'origine de la charge. Des charges différant notablement entre elles, en particulier de par leurs différents degrés d'insaturation des chaines hydrocarbonées, ou leurs différentes teneurs en impuretés azotées, peuvent être converties totalement aussi bien en ce qui concerne l'élimination de l'oxygène qu'en ce qui concerne l'élimination de l'azote. On peut par exemple traiter une charge moins chargée en azote (de préférence dans la première zone) avec une charge plus chargée en azote (de préférence introduit dans une zone suivante).

Toutes ces charges contiennent des teneurs en oxygène élevées, ainsi que, à des teneurs très variables selon l'origine des charges, des composés soufrés, mais aussi des composés azotés, et des métaux comme le phosphore, le calcium, le magnésium, le potassium ou le sodium. La teneur en métaux peut aller jusqu'à 2500 ppm. Les teneurs en azote et en soufre sont généralement comprises entre 1 ppm et 100 ppm poids environ et de préférence inférieures à 100 ppm, selon leur nature. Elles peuvent atteindre jusqu'à 1% poids sur des charges particulières.

La charge traitée peut être brute, ou peut aussi avoir subi un traitement de raffinage ou pré-raffinage, dont le but est d'abaisser la teneur en métaux. Cette étape de pré-traitement peut avoir été réalisée au préalable, ou dans une section de prétraitement placé en amont du réacteur d'hydrotraitement. Cette étape optionnelle de prétraitement peut consister en un traitement thermique, associé à un passage sur des solides tels que les alumines ou les silice-alumines, ou encore un traitement à la vapeur d'eau, ou encore un traitement à l'acide comme par exemple l'acide phosphorique, ou encore un traitement par résine échangeuse d'ions, ou encore une association de plusieurs de ces étapes de pré-traitement. D'une manière générale, le prétraitement peut inclure toutes méthodes (dégommage, déphosphatation...) connus de l'homme du métier traitant du raffinage de l'huile à des fins alimentaires.

Dans la suite, l'invention sera décrite en se référant aux figures pour faciliter la compréhension, les figures ne limitant pas le caractère général de l'invention.

**Hydrotraitement**

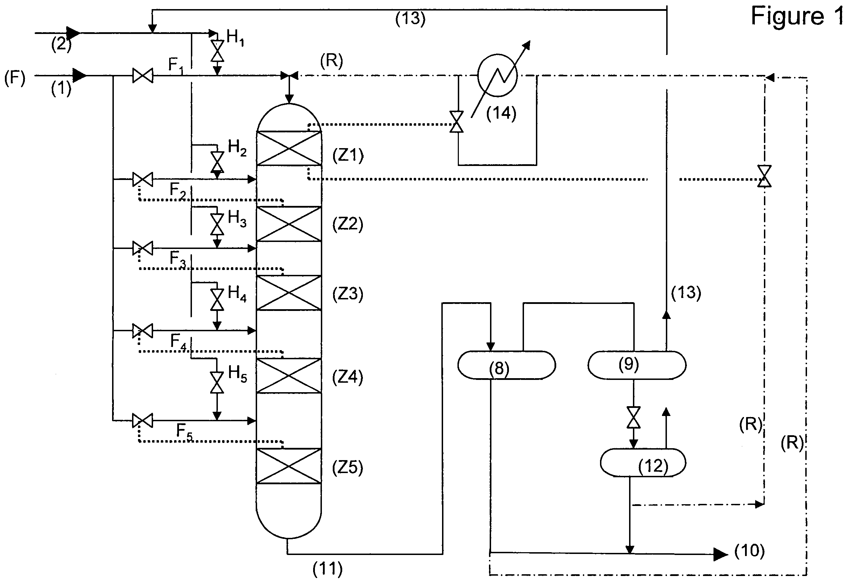

La charge brute encore appelée la charge fraîche, est injectée dans la ligne (1) représentée dans la figure 1. Cette charge est mélangée avec un gaz riche en hydrogène (2), mais qui peut également contenir d'autres composés hydrocarbures inertes, c'est à dire qui en réagissent pas en tant que tels avec les constituants de la charge. L'hydrogène peut avantageusement venir d'un appoint d'hydrogène et/ou du recyclage du gaz riche en hydrogène issu de l'étape de séparation après l'étape d'hydrotraitement. En pratique, l'hydrogène d'appoint peut provenir du reformage à la vapeur ou du reformage catalytique, et sa pureté en hydrogène est le plus souvent comprise entre 75 et 95 % volume, les autres gaz présents étant généralement le méthane, l'éthane, le propane et le butane. Le gaz riche en hydrogène issu de l'étape de séparation après l'étape d'hydrotraitement ou encore issu de l'étape de fractionnement après l'étape d'hydroisomérisation optionnelle subit de préférence préalablement un ou plusieurs traitements de purification intermédiaire avant d'être recyclé dans le procédé d'hydrotraitement et/ou d'hydroisomérisation.

Selon une caractéristique de l'invention, l'hydrogène utilisé est en excès par rapport à la consommation théorique, l'excédent d'hydrogène représente au moins 50% de cette consommation théorique, de préférence entre 75 et 400%, et de façon encore préférée entre 100% et 300%, 150% étant une valeur typique. La quantité d'hydrogène mise en jeu est contrôlée par la pression partielle d'hydrogène.

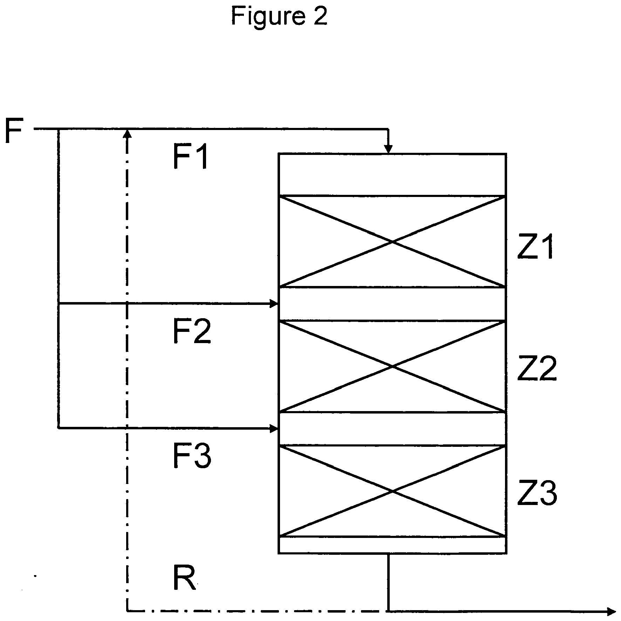

Pour une compréhension plus aisée de la présente invention, les définitions suivantes sont introduites. Elles font référence à la figure 2. Le réacteur comprend n zones catalytiques. Tous les flux sont exprimés en débit massique.

F: flux total de la charge renouvelable traitée dans le procédé
F1 : flux partiel de la charge introduit dans la première zone catalytique Z1
F2 : flux partiel de la charge introduit dans la deuxième zone catalytique Z2
F3 : flux partiel de la charge introduit dans la troisième zone catalytique Z3 et ainsi de suite...
Fn : flux partiel de la charge introduit dans la dernière zone catalytique Zn
R : flux de recycle, recyclée dans la première zone catalytique Z1

Le recycle total (RT) est défini comme le rapport massique entre le flux du recycle envoyé dans la première zone catalytique Z1 (R) et le flux total de la charge renouvelable (F) :

$$RT = R/F$$

Le recycle local (RF1) est défini comme le rapport massique entre le flux du recycle envoyé dans la première zone catalytique Z1 (R) et le flux partiel de la charge introduite dans la première zone catalytique 1 (F1) :

$$RF1 = R/F1$$

Excepté durant la phase de démarrage du procédé, l'agent diluant qui est recyclé au niveau de la zone catalytique Z1, donc en amont du premier lit catalytique, est constitué par une partie du produit hydrocarbure liquide sortant de la section hydrotraitement. Cet agent diluant recyclé à l'entrée de la première zone catalytique, est appelé aussi recycle liquide ou recycle dans la suite de cette description, et son débit est noté R dans les définitions qui précèdent. La section hydrotraitement du procédé étant conçue de façon à convertir totalement les charges traitées, le recycle liquide produit est un flux d'hydrocarbure exempt d'oxygène, ce qui signifie que sa teneur en oxygène est inférieure à la limite de détection analytique, et est essentiellement composé de paraffines. En conséquence, ce recycle liquide est inerte vis-à-vis des réactions d'hydrotraitement, et joue ainsi pleinement son rôle de diluant de la charge, ce qui permet de limiter l'élévation de température dans la première zone catalytique, due à l'exothermie des réactions qui s'y produisent. Néanmoins, l'objectif est, pour une capacité donnée, c'est à dire pour un débit massique donné de charge traitée, noté F, de limiter la quantité de recycle liquide injecté dans la première zone, noté R, ceci afin de limiter le débit total du flux alimentant cette zone catalytique. Ceci permet d'utiliser des réacteurs d'hydrotraitement de dimensions comparables à celles des réacteurs d'hydrotraitement de coupes pétrolières comme les gazoles (et donc de limiter les coûts), de limiter les pertes de charges et d'éviter des phénomènes d'engorgement du réacteur. En pratique, selon une caractéristique préférée de l'invention, le rapport massique entre le flux du recycle envoyé dans la première zone catalytique Z1 (noté R) et le flux total de la charge renouvelable traité (noté F), aussi appelée recycle total (RT) est de préférence inférieur à 1.0, et de manière encore préférée inférieur à 0.5, lesdits flux étant exprimés en débit massique.

Il a été découvert qu'il était avantageux d'injecter la charge dans les différentes zones catalytiques (débit massique F1 injecté dans la zone Z1, F2 dans la zone Z2, etc...) en faisant en sorte que des proportions croissantes de charge soient injectées dans les zones catalytiques successives. Ceci se traduit par la relation suivante : F1/F inférieur ou égal à F2/F, lui-même inférieur on égal à F3/F, etc..., et plus généralement F(n-1)/F inférieur ou égal à Fn/F, pour le cas général où n est le nombre de zones catalytiques mises en jeu.

L'avantage apporté par une telle distribution de la charge dans les différentes zones catalytiques successives, réside dans le fait que les températures de sortie des différentes zones suivent un profil montant, ce qui permet d'atteindre des températures suffisantes afin de réduire le plus possible les teneurs résiduelles en azote dans le produit sortant des différentes zones, ceci dans le but de préserver l'activité catalytique de le section d'hydroisomérisation en aval.

En particulier, le demanderesse a découvert qu'il était avantageux d'injecter un flux partiel de charge F1 dans la première zone catalytique de telle sorte que le rapport massique entre le flux du recycle liquide (R) injecté en entrée de la première zone catalytique Z1, et le flux partiel de charge injectée en entrée de zone 1 (F1), soit supérieur ou égal à 10.0, lesdits flux étant exprimés en débit massique. Ce rapport est aussi appelé recycle local. L'utilisation d'un tel agencement des flux de charge et de recycle liquide permet :

- d'une part, d'obtenir une température homogène dans toute la section du réacteur en sortie de zone Z1.
- d'autre part, d'atteindre en sortie de zone Z1 une température suffisante, permettant d'amorcer les réactions d'hydrodéazotation et ainsi de réduire les teneurs résiduelles en azote dans l'hydrocarbure liquide produit en sortie de la zone Z1.
- d'atteindre des températures supérieures en sortie des zones catalytiques suivant la zone Z1 (zones Z2 à Zn), et suffisantes pour augmenter les taux d'élimination de l'azote.

En effet, l'introduction de la charge en proportions croissantes couplé avec un recycle local important sur la première zone, permet d'atteindre par un profil montant de températures, une zone suffisamment chaude en fin de zone catalytique pour permettre l'hydrodéazotation tout en maintenant la température suffisamment basse à l'entrée de la zone catalytique pour favoriser les réactions d'hydrodésoxygénation. Le ratio du recycle local supérieur ou égale à 10 signifie qu'on injecte relativement peu de charge sur la première zone, permettant ainsi d'injecter le restant de la charge dans des proportions plus importantes et croissantes dans les zones catalytiques successives. L'augmentation de la quantité de la charge injectée dans les zones successives permet d'obtenir un profil montant en températures d'entrée et de sortie des différentes zones.

Les flux entrant dans la seconde zone catalytique sont donc :

- la charge brute injectée en entrée de zone Z2 (F2), telle que le rapport massique F2/F soit supérieur au rapport massique F1/F,
- le recycle liquide injecté en entrée de zone Z1, composé quasi-exclusivement d'hydrocarbures paraffiniques et ayant traversé la zone Z1,
- l'effluent formé par la conversion de la charge dans la zone Z1, correspondant au débit F1. Les hydrocarbures liquides présents dans cet effluent sont exempts d'oxygène et quasi-exclusivement des hydrocarbures paraffiniques.

Durant les phases de démarrage, une large gamme d'hydrocarbures peut être injectée, comme par exemple une coupe gazole légère, jusqu'à ce qu'une quantité suffisante de produit paraffinique soit disponible pour être recyclée en entrée de zone Z1. La charge est alimentée par la ligne (1), comme le montre la figure 1, tandis que le gaz riche en hydrogène l'est par la ligne (2). La charge est distribuée en différents flux F1, F2,..., Fn alimentant les différentes zones catalytiques successives. Le gaz riche en hydrogène est distribué en autant de flux H1, H2, ..., Hn. Le flux de charge F1 est mélangée au flux de gaz (H1), le flux de charge (F2) est mélangé au flux de gaz (H2), et ainsi de suite jusqu'à la n-ième zone catalytique.

La température des flux de charge F1, F2,..., Fn est inférieure à 150°C, de préférence inférieure à 100°C, et de manière encore préféré inférieure à 80 °C. Elle doit être suffisante pour permettre un abaissement de viscosité suffisant et donc un transfert adéquat des bacs de stockage jusqu'à la section réactionnelle de l'hydrotraitement. Il n'est ni utile ni souhaitable de porter la température de la charge à des valeurs supérieures en l'absence d'hydrogène, de façon à éviter toute dégradation des charges par suite de polymérisation et par suite de cokage par exemple.

De la même façon, la température du gaz riche en hydrogène, qui est mélangé à la charge, est la plus basse possible compatible avec l'opération du procédé, puisqu'il est avantageux pour le procédé de mélanger la charge à de l'hydrogène à basse température, de façon à abaisser la température par effet de quench appliqué aux produits hydrocarbures sortant des différentes zones catalytiques. En pratique, comme une élévation de température se produit lors de la compression du gaz riche en hydrogène, l'hydrogène est souvent refroidi après compression. Le plus souvent, la température du gaz riche en hydrogène est comprise entre 40 et 100°C, par exemple 50°C.

La température du flux injecté à l'entrée de la zone catalytique Z1 (charge + recycle liquide constitué par une partie du produit liquide sortant de l'étape de séparation b) doit être soigneusement réglée.

La température à l'entrée de la zone catalytique Z1 doit être au minimum de 180°C, de préférence 200°C de façon à permettre l'amorçage de l'ensemble des réactions : réactions d'élimination de l'oxygène selon mécanisme conduisant à la formation d'eau, ou selon mécanisme de décarboxylation/ décarbonylation conduisant à la formation de $CO_2$ et CO, mais aussi réactions d'hydrodéazotation dans au moins une partie de cette zone catalytique. Cette température d'entrée peut être ajustée selon la nature de la charge. Avantageusement, la température à la sortie de la zone Z1 est supérieure à 250°C. Le volume de catalyseur mis en jeu dans cette zone catalytique est adapté de façon à ce que la conversion -c'est à dire le taux d'élimination de l'oxygène- soit complète en sortie de cette zone Z1.

En sortie de la zone catalytique Z1, est ajouté le second flux de charge F2, qui représente une plus grande proportion de charge que celle injectée en entrée de zone Z1. Cette charge injectée en entrée de zone Z2, peut être strictement identique à celle injectée en entrée de zone Z1, mais aussi être une charge d'origine renouvelable mais de nature différente. Ce flux de charge est additionné au flux de gaz riche en hydrogène ($H_2$), le tout est injecté dans la zone réactionnelle, où il est mélangé à l'effluent provenant de la zone Z1. Ceci permet un abaissement de la température du produit formé à l'issue de la zone Z1, et la température en entrée de la zone Z2 est donc généralement supérieure à celle en entrée de zone Z1. Les mêmes familles de réactions se produisent dans la zone Z2 et la zone Z1, avec une cinétique un peu plus rapide dans la zone Z2 en raison d'une température moyenne supérieure.

Le même principe se déroule ensuite dans les zones catalytiques successives, le flux de charge étant additionné au produit totalement converti formé dans les zones catalytiques antérieures.

Au fur et à mesure que la charge se transforme en hydrocarbures paraffiniques dans une zone catalytique, la température augmente dans la zone, les réactions d'hydrogénation et de déoxygenation étant des réactions fortement exothermiques. Ainsi, la température est suffisamment élevée vers la sortie d'une zone catalytique pour pourvoir effectuer la réaction d'hydrodéazotation. La température à la sortie d'au moins une zone catalytique est de préférence supérieure à 300°C, de préférence supérieure à 320°C.

Les ratios entre débits d'hydrogène ajoutés à chacun de ces flux (F1), ... (Fn) et débits massiques de charge (F1), ... (Fn), sont du même ordre de grandeur pour l'ensemble des zones catalytiques, le ratio entre le débit d'hydrogène et le débit de charge est compris entre 300 et 1500 Nm$^3$/m$^3$, de préférence entre 600 et 900 Nm$^3$/m$^3$.

Optionnellement, il est possible d'injecter entre les zones catalytiques, un flux liquide complémentaire si le besoin de diluer davantage la charge se fait sentir.

Selon une variante préférée, des vannes de régulation des flux partiels de charge et d'hydrogène peuvent être contrôlées par les valeurs de température au niveau des entrées et des sorties des zones catalytiques de manière à ajuster les flux partiels de charge et d'hydrogène ainsi que le flux du recycle liquide pendant le fonctionnement. De cette manière la température désirée à l'entrée des zones catalytiques et dans les zones catalytiques est maintenue. Ceci est illustré par les lignes pointillées dans la figure 1. De même, le contrôle de la température peut être réalisé en variant la température de la charge et/ou de l'hydrogène injectées et/ou du recycle (via l'échangeur (14)) dans le système de réacteur (voir ci-dessus).

Le réacteur d'hydrotraitement du procédé selon l'invention peut contenir un nombre variable de zones catalytiques. Il comprend habituellement entre 3 et 10 zones catalytiques, de préférence entre 3 et 6 zones catalytiques. On entend par zone catalytique un lit catalytique. Chaque zone catalytique peut comprendre une ou plusieurs couches de catalyseurs, identiques ou différentes, éventuellement complétée par des couches inertes. Les zones catalytiques peuvent contenir des catalyseurs identiques ou différents.

Le type de catalyseurs utilisés dans la section hydrotraitement de ce procédé, est bien connu dans l'art antérieur.

S'agissant de catalyseurs actifs sous forme sulfures, et les charges brutes traitées ayant en général des teneurs en soufre limitées (moins de 100 ppm poids généralement, et le plus souvent moins de 50 ppm poids), il convient d'additionner à l'ensemble des flux de charge, un composé soufré tel que le Di-Méthyl-Di-Sulfure (DMDS), qui dans les conditions de température de la section hydrotraitement, se décomposera en $H_2S$ et en méthane. Ce dispositif permet de conserver sous leur forme sulfure les catalyseurs d'hydrotraitement utilisés dans le présent procédé, et ainsi de maintenir une activité catalytique suffisante tout au long du cycle. Les teneurs en DMDS injectées préconisées sont comprises entre 10 et 50 ppm poids équivalent soufre par rapport à la charge. En pratique, une addition de DMDS correspondant à 50 ppm poids équivalent soufre par rapport à la charge, est suffisante pour conserver l'activité catalytique tout au long du cycle.

Les catalyseurs utilisés dans la section hydrotraitement du procédé selon l'invention, peut être une association des catalyseurs décrits dans ce qui suit.

Le catalyseur d'hydrotraitement est un catalyseur sulfuré qui comprend un ou plusieurs éléments des groupes 6, 8, 9 et 10 de la classification périodique, de préférence le nickel, le molybdène, le tungstène et/ou le cobalt.

Le catalyseur en lit fixe est avantageusement un catalyseur d'hydrotraitement comprenant une fonction hydro-déshydrogénante comprenant au moins un métal du groupe VIII et/ou du groupe VIB, pris seul ou en mélange et un support choisi dans le groupe formé par l'alumine, la silice, les silices-alumines, la magnésie, les argiles et les mélanges d'au moins deux de ces minéraux. Ce support peut également avantageusement renfermer d'autres composés et par exemple des oxydes choisis dans le groupe formé par l'oxyde de bore, la zircone, l'oxyde de titane, l'anhydride phosphorique. Le support préféré est un support d'alumine et de manière très préférée de l'alumine η, δ ou γ.

Ledit catalyseur est avantageusement un catalyseur comprenant des métaux du groupe VIII de préférence choisis parmi le nickel et le cobalt, pris seul ou en mélange, de préférence en association avec au moins un métal du groupe VIB de préférence choisi parmi le molybdène et le tungstène, pris seul ou en mélange. De façon préférée on utilise un catalyseur de type NiMo.

La teneur en oxydes de métaux des groupes VIII et de préférence en oxyde de nickel est avantageusement comprise entre 0,5 et 10 % en poids d'oxyde de nickel (NiO) et de préférence entre 1 et 5 % en poids d'oxyde de nickel et la teneur en oxydes de métaux des groupes VIB et de préférence en trioxyde de molybdène est avantageusement comprise entre 1 et 30 % en poids d'oxyde de molybdène ($MoO_3$), de préférence de 5 à 25 % en poids, les pourcentages étant exprimés en % poids par rapport à la masse totale du catalyseur.

La teneur totale en oxydes de métaux des groupes VIB et VIII dans le catalyseur utilisé est avantageusement comprise entre 5 et 40 % en poids et de manière préférée comprise entre 6 et 30 % en poids par rapport à la masse totale du catalyseur.

Le rapport pondéral exprimé en oxyde métallique entre métal (ou métaux) du groupe VIB sur métal (ou métaux) du groupe VIII est avantageusement compris entre 20 et 1 et de manière préférée entre 10 et 2.

Ledit catalyseur utilisé dans l'étape d'hydrotraitement du procédé selon l'invention doit être avantageusement caractérisé par un fort pouvoir hydrogénant de façon à orienter le plus possible la sélectivité de la réaction vers une hydrogénation conservant le nombre d'atomes de carbone des chaînes grasses c'est à dire la voie hydro-déoxygénation, ceci afin de maximiser le rendement en hydrocarbures entrant dans le domaine de distillation des gazoles et/ou des kérosènes. C'est pourquoi de manière préférée, on opère à une température relativement basse. Maximiser la fonction hydrogénante permet également de limiter les réactions de polymérisation et/ou de condensation conduisant à la formation de coke qui dégraderait la stabilité des performances catalytiques.

Ledit catalyseur utilisé dans l'étape d'hydrotraitement du procédé selon l'invention peut également avantageusement contenir un élément dopant choisi parmi le phosphore et le bore, pris seuls ou en mélange. Ledit élément dopant peut être introduit dans la matrice ou de préférence être déposé sur le support. On peut également déposer du silicium sur le support, seul ou avec le phosphore et/ou le bore et/ou le fluor.

La teneur en poids d'oxyde dudit élément dopant est avantageusement inférieure à 20 % et de manière préférée inférieure à 10 % et elle est avantageusement d'au moins 0.001 % par rapport à la masse totale du catalyseur.

Selon une variante préférée, on utilisera les catalyseurs tels que décrits dans la demande FR 2 943 071 décrivant des catalyseurs ayant une forte sélectivité pour les réactions d'hydrodésoxygénation. Cette demande décrit des catalyseurs massiques ou supportés comprenant une phase active constituée d'au moins un élément du groupe VIB et d'au moins un élément du groupe VIII, ledit élément du groupe VIB étant choisi parmi le molybdène et le tungstène et de préférence, ledit élément du groupe VIB est le molybdène et ledit élément du groupe VIII est choisi parmi le nickel et le cobalt et de préférence ledit élément du groupe VIII est le nickel, lesdits éléments étant sous forme sulfure et le rapport atomique du métal (ou métaux) du groupe VIII sur métal (ou métaux) du groupe VIB, étant strictement supérieur à 0 et inférieur à 0,095, de manière préférée entre 0,01 et 0,05 et de manière très préférée entre 0,01 et 0,03.

Dans le cas où ledit catalyseur est sous forme supportée, la teneur en oxyde d'élément du groupe VIB est avantageusement comprise entre 1 % et 30 % poids par rapport à la masse totale du catalyseur, et la teneur en oxyde d'élément du groupe VIII est avantageusement strictement supérieure à 0 % et inférieure à 1,5 % poids par rapport à la masse totale du catalyseur.

Dans le cas où ledit catalyseur est sous forme massique, les teneurs en oxyde des éléments des groupes VIB et VIII sont définies par les rapports atomiques du métal (ou métaux) du groupe VIII sur métal (ou métaux) du groupe VIB définis selon l'invention. Pour un rapport atomique du métal (ou métaux) du groupe VIII sur métal (ou métaux) du groupe VIB strictement supérieur à 0 et inférieur à 0,095, la teneur en élément du groupe VIB est avantageusement supérieure à 95,3% et strictement inférieure à 100% poids en équivalent oxyde de l'élément du groupe VIB et la teneur en élément du groupe VIII est avantageusement strictement supérieur à 0 et inférieure à 4,7% poids en équivalent oxyde de l'élément du groupe VIII.

Les supports utilisés dans la demande FR 2 943 071 sont identiques à ceux décrits ci-dessus, de préférence il est constitué uniquement d'alumine.

Le catalyseur peut également avantageusement contenir au moins un élément dopant afin d'atteindre un niveau de conversion élevé tout en maintenant une sélectivité de réaction pour la voie d'hydrodésoxygénation. La phase active dans le cas où ledit catalyseur est sous forme massique et/ou le support dans le cas où ledit catalyseur est sous forme supportée peuvent donc également avantageusement contenir au moins un élément dopant choisi parmi le phosphore, le fluor et le bore et de préférence, l'élément dopant est le phosphore. Il est connu de l'homme de l'art que ces éléments ont des effets indirects sur l'activité catalytique : une meilleure dispersion de la phase active sulfurée et une augmentation de l'acidité du catalyseur favorable aux réactions d'hydrotraitement (Sun et al, Catalysis Today 86 (2003) 173).

La teneur en élément dopant, de préférence en phosphore est avantageusement strictement supérieure à 1% et inférieure à 8 % poids d'oxyde $P_2O_5$ par rapport à la masse totale du catalyseur et de préférence supérieure à 1,5% et inférieure à 8% et de manière très préférée supérieure à 3% et inférieure à 8% poids.

Selon une autre variante préférée, on utilisera les catalyseurs tels que décrit dans la demande FR 2 940 144 décrivant des catalyseurs supportés ou massiques comprenant une phase active constituée d'un élément sulfuré du groupe VIB, l'élément du groupe VIB étant le molybdène, ledit catalyseur, dans le cas ou celui ci est un catalyseur supporté, présentant une teneur en élément du groupe VIB comprise entre 17 et 35% poids d'oxyde dudit élément du groupe VIB par rapport à la masse totale du catalyseur et comprenant également un élément dopant choisis parmi le phosphore, le bore et le silicium, déposé sur ledit support. Ces catalyseurs présentent une sélectivité très élevée pour les réactions d'hydrodésoxygénation et permet de limiter les réactions de décarboxylation/décarbonylation et ainsi de limiter les inconvénients engendrés par la formation d'oxydes de carbone. On utilisera ces catalyseurs de préférence dans au moins la première zone catalytique.

Dans le cas ou ce catalyseur est supporté, il comporte avantageusement un support tel que décrit ci-dessus, de préférence il est constitué uniquement d'alumine.

Dans le cas où ledit catalyseur est sous forme supportée, la teneur en élément du groupe VIB est avantageusement entre 18 et 33% poids et de manière très préférée entre 20 et 32% poids d'oxyde de l'élément du groupe VIB par rapport à la masse totale du catalyseur.

Dans le cas ou ledit catalyseur est sous forme supporté, ledit catalyseur comprend également au moins un élément dopant choisi parmi le phosphore, le fluor et le bore et de préférence, l'élément dopant est le phosphore, afin d'atteindre un niveau de conversion élevé tout en maintenant une sélectivité de réaction pour la voie d'hydrodésoxygénation. La teneur en élément dopant, ledit élément dopant étant de préférence le phosphore, est avantageusement strictement supérieure à 0,5% et inférieure à 8 % poids d'oxyde $P_2O_5$ par rapport à la masse totale du catalyseur et de préférence supérieure à 1% et inférieure à 8% et de manière très préférée supérieure à 3% et inférieure à 8% poids.

Ce catalyseur peut alternativement être massique, dans ce cas, ledit catalyseur ne contient pas de support.

Dans le cas où ledit catalyseur est sous forme massique, la teneur en élément du groupe VIB est avantageusement comprise entre 92 et 100% poids d'oxyde de l'élément du groupe VIB par rapport à la masse totale du catalyseur, de préférence supérieur à 92% et strictement inférieure à 99,5% poids, de manière préférée comprise entre 92 et 99% poids et de manière très préférée, comprise entre 92 et 97% poids. Le catalyseur selon l'invention, dans le cas ou ledit catalyseur est sous forme massique, peut également avantageusement contenir au moins un élément dopant choisis parmi le phosphore, le fluor et le bore et de préférence, l'élément dopant est le phosphore. La teneur en élément dopant, ledit élément dopant étant de préférence le phosphore, est avantageusement strictement supérieure à 0,5% et inférieure à 8 % poids d'oxyde $P_2O_5$ par rapport à la masse totale du catalyseur et de préférence supérieure à 1% et inférieure à 8% et de manière très préférée supérieure à 3% et inférieure à 8% poids.

On ne sortirait pas du cadre de la présente invention en utilisant dans l'étape d'hydrotraitement du procédé selon l'invention, de manière simultanée ou de manière successive, un seul catalyseur ou plusieurs catalyseurs différents dans les zones catalytiques.

Dans le cadre de l'invention, il est ainsi possible de maintenir une conversion globale de la charge issue de source renouvelable, c'est à dire une conversion par hydrodésoxygénation et décarboxylation/décarbonylation confondue, avantageusement supérieure ou égale à 90 % et de préférence une conversion globale de la charge égale à 100 %, tout en maximisant le rendement en produit d'hydrodésoxygénation ou la conversion par hydrodésoxygénation qui reste, conformément à l'invention, supérieure ou égale à 50%.

Dans le cas ou les catalyseurs ayant une forte sélectivité pour l'HDO (tels que décrits ci-dessus) sont utilisés, la conversion par hydrodésoxygénation est supérieure ou égale à 90%, de préférence supérieure ou égale à 95% et de manière préférée, supérieure ou égale à 96%. Dans ce cas la conversion par décarboxylation/décarbonylation ou rendement en produit de décarboxylation/décarbonylation de la charge issue de sources renouvelables est avantageusement limitée à au plus 10%, et de préférence limitée à au plus 5% et de manière plus préférée à au plus 4%.

La réaction d'hydrodésoxygénation conduit à la formation d'eau par consommation d'hydrogène et à la formation d'hydrocarbures de nombre de carbone égal à celui des chaînes d'acides gras initial. L'effluent issu de l'hydrodésoxygénation comporte des composés hydrocarbures pairs, tels que les hydrocarbures C14 à C24 et sont largement majoritaires par rapport aux composés hydrocarbures impairs, tels que C15 à C23, obtenu par les réactions de décarbonylation/décarboxylation. La sélectivité pour la voie hydrodésoxygénation est mise en évidence par la mesure du rendement total en hydrocarbure ayant un nombre d'atome de carbone pair et du rendement total en hydrocarbure ayant un nombre d'atome de carbone impair dans la fraction liquide valorisable en carburant. Les rendements en hydrocarbures pairs et impairs permettant d'accéder à la sélectivité de réaction (HDO/décarbonylation/décarboxylation) sont obtenus par analyse chromatographique en phase gazeuse des effluents liquides de réaction valorisable en carburant. La technique de mesure par analyse chromatographique en phase gazeuse est une méthode connue de l'homme du métier.

Sauf indication contraire, le procédé selon l'invention est opéré dans des conditions d'hydrotraitement généralement connues dans l'art antérieur (cf. par exemple brevet EP 1 741 768). La pression totale est généralement comprise entre 20 et 150 bar (2 MPa et 15 MPa), et de préférence entre 50 et 100 bar (5 MPa et 10 MPa).

Comme indiqué précédemment, l'hydrogène est utilisé en excès. Dans le procédé selon l'invention, le ratio entre le débit d'hydrogène et le débit de charge brute est compris entre 300 et 1500 Nm$^3$/m$^3$, de préférence entre 600 et 900 Nm$^3$/m$^3$.

Une opération satisfaisante du procédé selon l'invention conduit à utiliser une VVH globale (définie comme étant le ratio entre le débit volumique total de charge brute traitée et le volume total de catalyseur dans la section hydrotraitement) comprise entre 0.1 et 5.0 h$^{-1}$, de préférence entre 0.1 et 1.5 h$^{-1}$.

Les températures utilisées dans les différentes zones de la section hydrotraitement, doivent être soigneusement contrôlées, afin d'éviter le plus possible les réactions indésirables telles que :

- les réactions de polymérisation de la charge, conduisant au dépôt de coke et donc à la désactivation du catalyseur,
- les réactions de décarboxylation/décarbonylation, conduisant à une perte de rendement en distillats moyens,

et dans le même temps de réaliser la conversion totale de la charge, aussi bien en élimination des composés oxygénés que des composés azotés. D'une manière générale, le procédé selon l'invention opère à une température comprise entre 200 et 400 °C. L'introduction de la charge en proportions croissantes couplé avec un recycle important sur la première zone catalytique permet d'obtenir un profil montant de températures en entrée des zones, mais aussi en sortie des zones.

La température à l'entrée de la zone Z1 doit être supérieure à 180°C, de préférence supérieure à 200°C. Les températures à l'entrée des zones catalytiques suivantes doivent être supérieures à celle en entrée de la zone précédente, généralement inférieure à 300°C et de préférence inférieure à 280°C.

La température à la sortie d'au moins une zone catalytique est de préférence supérieure à 300°C, de préférence supérieure à 320°C. Les températures à la sortie de chacune des zones catalytiques doivent être de préférence inférieures à 400°C, et de manière encore préférée inférieure à 380°C, de façon à limiter la désactivation du catalyseur par cokage.

Le procédé selon l'invention utilise des réacteurs en lit fixe à écoulement ruisselant connus de l'homme du métier. Les réactifs (charge et hydrogène) sont introduits dans le réacteur suivant un écoulement descendant en co-courant du haut vers le bas du réacteur. De tels réacteurs sont par exemple décrits dans le document US 7 070 745.

Entre chaque zone catalytique, il est possible d'injecter de l'hydrogène supplémentaire, afin de profiter d'un effet de trempe (quench selon le terme anglo-saxon) et d'atteindre les températures souhaitées en entrée de la zone catalytique suivante. Ainsi, des boîtes de quench sont possiblement installées entre chaque zone catalytique, afin d'assurer une meilleure homogénéité des températures sur toute la section du réacteur, et pour l'ensemble des zones catalytiques.

De la même manière, des distributeurs sont possiblement installés entre chaque zone catalytique, afin de garantir une alimentation homogène en charge liquide, sur toute la section du réacteur, et pour l'ensemble des zones catalytiques.

Un avantage du procédé selon l'invention consiste dans sa grande flexibilité, selon l'origine de la charge. Des charges différant notablement entre elles, en particulier de par leurs différents degrés d'insaturation des chaînes hydrocarbonées, peuvent être converties totalement aussi bien en ce qui concerne l'élimination de l'oxygène (ce qui amène une efficacité maximale de dilution de la charge brute dans la zone suivante) qu'en ce qui concerne l'élimination de l'azote (qui permet un bien meilleur fonctionnement de l'étape d'hydroisomérisation en aval).

Optionnellement, le procédé peut également convertir des charges issues de sources renouvelables en mélange avec des coupes pétrolières telles que les gazoles, les kérosènes, voire les essences issus des procédés de raffinage pétrolier. De préférence les coupes pétrolières sont des charges pétrolières de type distillats moyens choisies dans le groupe formé par les gazoles et/ou les kérosènes de distillation atmosphérique directe et les gazoles et/ou les kérosènes issus de procédés de conversion, ou l'un quelconque de leur mélange.

De préférence, les coupes pétrolières sont choisies dans le groupe formé par les gazoles atmosphériques de distillation directe, les gazoles issus de procédés de conversion tels que par exemple ceux provenant du coking, d'une hydroconversion en lit fixe (tels que ceux issus des procédés HYVAHL® de traitement des lourds mis au point par la demanderesse) ou des procédés d'hydrotraitement des lourds en lit bouillonnant (tels que ceux issus des procédés H-OIL®), ou encore les huiles désasphaltées au solvant (par exemple au propane, au butane, ou au pentane) venant du désasphaltage de résidu sous vide de distillation directe, ou de résidus issus des procédés de conversion des charges lourdes tels que par exemple HYVAHL® et HOIL®. Les charges peuvent aussi avantageusement être formées par mélange de ces diverses fractions. Elles peuvent également avantageusement contenir des coupes gazoles légers ou kérosènes avec un profil de distillation d'environ 100°C à environ 370°C. Elles peuvent aussi avantageusement contenir des extraits aromatiques et des paraffines obtenus dans le cadre de la fabrication d'huiles lubrifiantes.

Dans ce cas de figure, la quantité de recycle liquide envoyé à la première zone catalytique de la section hydrotraitement, peut être grandement réduit voire supprimé, puisque ces flux de charges pétrolières conduisent lors de leur traitement à l'hydrogène, à des dégagements de chaleur plus limités que lors du traitement de charges d'origine renouvelable comportant des quantités notables d'oxygène.

**Séparation**

Le produit liquide formé dans la dernière zone catalytique est soutiré dans la ligne (11), et est soumis ensuite à au moins une étape de séparation permettant de séparer une fraction gazeuse contenant l'hydrogène, le CO, le $CO_2$, l'$H_2S$, l'eau et les gaz légers et une fraction liquide contenant les hydrocarbures paraffiniques.

Selon une variante, la séparation peut être effectuée en une seule étape par un séparateur haute température haute pression (8) opérant sans réduction de pression à une température entre 145°C et 280°C.

Selon une autre variante, l'étape de séparation comprend une séparation en deux étapes sans réduction de pression, la première séparation étant effectuée entre 145°C et 280°C dans un séparateur à haute température (8), la deuxième étant effectuée entre 25°C et 100°C dans un séparateur à basse température (9). Dans un mode de réalisation préféré, le condensat de la fraction obtenu à partir de la deuxième étape de séparation est introduit dans un récipient de dégazage (12).

De préférence, l'effluent liquide issu de la séparation gaz/liquide précédente subit ensuite une séparation d'au moins une partie et de préférence la totalité restante de l'eau formée, d'au moins une base hydrocarbonée liquide, l'eau étant produite lors des réactions d'hydrodésoxygénation.

Le but de cette étape est de séparer l'eau de l'effluent hydrocarboné liquide. On entend par élimination de l'eau, l'élimination de l'eau produite par les réactions d'hydrodésoxygénation (HDO). L'élimination plus ou moins complète de l'eau est avantageusement fonction de la tolérance à l'eau du catalyseur d'hydroisomérisation utilisé dans l'étape optionnelle suivante du procédé selon l'invention. L'élimination de l'eau peut être réalisée par toutes les méthodes et techniques connues de l'homme du métier, telles que par exemple par séchage, passage sur un dessicant, flash, extraction par solvant, distillation et décantation ou par association d'au moins deux de ces méthodes.

De façon optionnelle, une étape de purification finale des différents polluants peut être mise en oeuvre par des méthodes connues de l'homme du métier telles que par exemple par strippage à la vapeur ou à l'azote ou par coalescence et/ou masse de captation.

La partie de l'effluent liquide (10) qui n'est pas recyclée pour être additionnée au flux de charge injectée dans la zone Z1 comme recycle liquide (R), est envoyée soit directement au pool pour être incorporée au pool gazole, soit directement dans la section d'hydroisomérisation (HIS) optionnelle, afin de produire des bases kérosènes et/ou gazoles. En effet, l'effluent liquide est suffisamment déazoté pour préserver l'activité catalytique de la section d'hydroisomérisation. Un réacteur d'hydrodéazotation entre l'hydrotraitement et l'hydroisomérisation n'est pas nécessaire.

**Hydroisomérisation**

Selon un mode de réalisation préféré, une partie au moins de la fraction liquide (10) contenant les hydrocarbures paraffiniques obtenue à l'issue de l'étape de séparation précédente est hydroisomérisée en présence d'un catalyseur d'hydroisomérisation. Les catalyseurs d'hydroisomérisation utilisés sont avantageusement de type bifonctionnels, c'est-à-dire qu'ils possèdent une fonction hydro/déshydrogénante et une fonction hydroisomérisante.

Ledit catalyseur d'hydroisomérisation comprend avantageusement au moins un métal du groupe VIII et/ou au moins un métal du groupe VIB en tant que fonction hydro-déshydrogénante et au moins un tamis moléculaire ou un support minéral amorphe en tant que fonction hydroisomérisante.

Ledit catalyseur d'hydroisomérisation comprend avantageusement soit au moins un métal noble du groupe VIII de préférence choisi parmi le platine ou le palladium, actifs sous leur forme réduite, soit au moins un métal du groupe VIB, de préférence choisi parmi le molybdène ou le tungstène, en combinaison avec au moins un métal non noble du groupe VIII, de préférence choisi parmi le nickel et le cobalt, utilisés de préférence sous leur forme sulfurée.

Dans le cas où le catalyseur d'hydroisomérisation comprend au moins un métal noble du groupe VIII, la teneur totale en métal noble du catalyseur d'hydroisomérisation est avantageusement comprise entre 0,01 et 5% en poids par rapport au catalyseur fini, de manière préférée entre 0,1 et 4% en poids et de manière très préférée entre 0,2 et 2% en poids.

De préférence, le catalyseur d'hydroisomérisation comprend le platine ou le palladium et de manière préférée, le catalyseur d'hydroisomérisation comprend le platine. La fonction hydro/déshydrogénante métallique peut avantageusement être introduite sur ledit catalyseur par toute méthode connue de l'homme du métier, comme par exemple le comalaxage, l'imprégnation à sec, l'imprégnation par échange.

Dans le cas où le catalyseur d'hydroisomérisation comprend au moins un métal du groupe VIB en combinaison avec au moins un métal non noble du groupe VIII, la teneur en métal du groupe VIB du catalyseur d'hydroisomérisation est avantageusement comprise, en équivalent oxyde, entre 5 et 40 % en poids par rapport au catalyseur fini, de manière préférée entre 10 et 35 % en poids et de manière très préférée entre 15 et 30 % en poids et la teneur en métal du groupe VIII dudit catalyseur est avantageusement comprise, en équivalent oxyde, entre 0,5 et 10 % en poids par rapport au catalyseur fini, de manière préférée entre 1 et 8 % en poids et de manière très préférée entre 1,5 et 6% en poids. De préférence, le catalyseur d'hydroisomérisation comprend du NiW.

Selon un mode de réalisation préféré, ledit catalyseur d'hydroisomérisation comprend au moins un support minéral amorphe en tant que fonction hydroisomérisante, ledit support minéral amorphe étant choisi parmi les alumines dopées au fluor et/ou chlore, les silice-alumines et les alumines silicées et de manière préférée les silice-alumines. De manière très préférée, le catalyseur comprend du NiW sur silice-alumine.

Selon un autre mode de réalisation préféré, ledit catalyseur d'hydroisomérisation comprend au moins un tamis moléculaire, de préférence au moins un tamis moléculaire zéolithique et de manière plus préférée, au moins un tamis moléculaire zéolithique 10 MR monodimensionnel en tant que fonction hydroisomérisante.

Les tamis moléculaires zéolithiques sont définis dans la classification "Atlas of Zeolite Structure Types", W. M Meier, D. H. Oison and Ch. Baerlocher, 5th revised edition, 2001, Elsevier auquel se réfère également la présente demande. Les zéolithes y sont classées selon la taille de leurs ouvertures de pores ou canaux.

Les tamis moléculaires zéolithiques 10 MR monodimensionnels présentent des pores ou canaux dont l'ouverture est définie par un anneau à 10 atomes d'oxygène (ouverture à 10 MR). Les canaux du tamis moléculaire zéolithique ayant une ouverture à 10 MR sont avantageusement des canaux monodimensionnels non interconnectés qui débouchent directement sur l'extérieur de ladite zéolithe. Les tamis moléculaires zéolithiques 10 MR monodimensionnels présents dans ledit catalyseur d'hydroisomérisation comprennent avantageusement du silicium et au moins un élément T choisi dans le groupe formé par l'aluminium, le fer, le gallium, le phosphore et le bore, de préférence l'aluminium. Les rapports Si/Al des zéolithes décrites ci-dessus sont avantageusement ceux obtenus à la synthèse ou bien obtenus après des traitements de désalumination post-synthèse bien connus de l'homme de l'art, tels que et à titre non exhaustif les traitements hydrothermiques suivis ou non d'attaques acides ou bien encore les attaques acides directes par des solutions d'acides minéraux ou organiques. Elles sont, de préférence, pratiquement totalement, sous forme acide, c'est-à-dire que le rapport atomique entre le cation de compensation monovalent (par exemple le sodium) et l'élément T inséré dans le réseau cristallin du solide est avantageusement inférieur à 0,1, de préférence inférieur à 0,05 et de manière très préférée inférieur à 0,01. Ainsi, les zéolithes entrant dans la composition dudit catalyseur sélectif d'hydroisomérisation sont avantageusement calcinées et échangées par au moins un traitement par une solution d'au moins un sel d'ammonium de manière à obtenir la forme ammonium des zéolithes qui, une fois calcinée, conduisent à la forme acide desdites zéolithes.

Ledit tamis moléculaire zéolithique 10 MR monodimensionnel dudit catalyseur d'hydroisomérisation est avantageusement choisi parmi les tamis moléculaires zéolithiques de type structural TON, tel que la NU-10, FER, tel que la ferrierite, EUO, choisis parmi la EU-1 et la ZSM-50, prises seules ou en mélange, ou les tamis moléculaires zéolithiques ZSM-48, ZBM-30, IZM-1, COK-7, EU-2 et EU-11, pris seul ou en mélange. De manière préférée, ledit tamis moléculaire zéolithique 10 MR monodimensionnel est choisi parmi les tamis moléculaires zéolithiques ZSM-48, ZBM-30, IZM-1 et COK-7, pris seul ou en mélange, de manière encore plus préférée parmi les tamis moléculaires zéolithiques ZSM-48 et ZBM-30, pris seul ou en mélange. De manière très préférée, ledit tamis moléculaire zéolithique 10 MR monodimensionnel est la ZBM-30 et de manière encore plus préférée, la ZBM-30 synthétisée avec le structurant organique triéthylènetétramine.

De préférence, le catalyseur d'hydroisomérisation comprend une phase active métallique constituée de platine et une fonction hydroisomérisante à base de ZBM-30 et de manière préférée, le catalyseur d'hydroisomérisation comprend une phase active métallique constituée de platine et une fonction hydroisomérisante à base de ZBM-30 synthétisée avec le structurant organique triéthylènetétramine.

La zéolithe ZBM-30 est décrite dans le brevet EP 46 504, et la zéolithe COK-7 est décrite dans les demandes de brevet EP 1 702 888 ou FR 2 882 744. La zéolithe IZM-1 est décrite dans la demande de brevet FR 2 911 866. La zéolithe de type structural TON est décrite dans l'ouvrage "Atlas of Zeolithe Structure Types", ci-dessus cité et en ce qui concerne la zéolithe NU-10, dans les brevets EP 65400 et EP 77624. La zéolithe de type structural FER est décrite dans l'ouvrage "Atlas of Zeolithe Structure Types", ci-dessus cité.

La teneur en tamis moléculaire zéolithique 10 MR monodimensionnel est avantageusement comprise entre 5 et 95% poids, de préférence entre 10 et 90% poids, de manière plus préférée entre 15 et 85% poids et de manière très préférée entre 20 et 80% poids par rapport au catalyseur fini.

De préférence, ledit catalyseur d'hydroisomérisation comprend également un liant constitué d'une matrice minérale poreuse. Ledit liant peut avantageusement être utilisé durant l'étape de mise en forme dudit catalyseur d'hydroisomérisation.

De préférence, la mise en forme est réalisée avec un liant constitué d'une matrice contenant de l'alumine, sous toutes ses formes connues de l'homme du métier, et de manière très préférée avec une matrice contenant de l'alumine gamma.

Les catalyseurs d'hydroisomérisation obtenus sont avantageusement mis en forme sous la forme de grains de différentes formes et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudres concassées, de tablettes, d'anneaux, de billes, de roues. D'autres techniques que l'extrusion, telles que le pastillage ou la dragéification, peuvent avantageusement être utilisées.

Dans le cas où le catalyseur d'hydroisomérisation contient au moins un métal noble, le métal noble contenu dans ledit catalyseur d'hydroisomérisation doit avantageusement être réduit. Une des méthodes préférées pour conduire la réduction du métal est le traitement sous hydrogène à une température comprise entre 150°C et 650°C et une pression totale comprise entre 1 et 250 bar (0.1 MPa et 25 MPa). Par exemple, une réduction consiste en un palier à 150°C de deux heures puis une montée en température jusqu'à 450°C à la vitesse de 1°C/min puis un palier de deux heures à 450°C ; durant toute cette étape de réduction, le débit d'hydrogène est de 1000 normaux m$^3$ hydrogène/m$^3$ catalyseur et la pression totale maintenue constante à 1 bar. Toute méthode de réduction ex-situ peut avantageusement être envisagée.

Dans l'étape d'hydroisomérisation, la charge est avantageusement mise en contact, en présence d'hydrogène avec ledit catalyseur d'hydroisomérisation, à des températures et des pressions opératoires permettant avantageusement de réaliser une hydroisomérisation de la charge en limitant le craquage, c'est-à-dire en limitant la production de la fraction 150°C⁻.

Ainsi, l'étape optionnelle d'hydroisomérisation du procédé selon l'invention opère avantageusement à une température comprise entre 150°C et 500°C, de préférence entre 150°C et 450°C, et de manière très préférée, entre 200°C et 450°C, à une pression comprise entre 1 MPa et 10 MPa, de préférence entre 2 MPa et 9 MPa et de manière très préférée, entre 3 MPa et 7 MPa, à une vitesse volumique horaire avantageusement comprise entre 0,1 h⁻¹ et 10 h⁻¹, de préférence entre 0,2 et 7 h⁻¹ et de manière très préférée entre 0,5 et 5 h⁻¹, à un débit d'hydrogène tel que le rapport volumique hydrogène/hydrocarbures est avantageusement compris entre 70 et 1000 Nm$^3$/m$^3$ de charge, de préférence entre 100 et 1000 normaux m$^3$ d'hydrogène par m$^3$ de charge et de manière très préférée entre 150 et 1000 normaux m$^3$ d'hydrogène par m$^3$ de charge.

De manière préférée, l'étape d'hydroisomérisation éventuelle opère à co-courant.

## Fractionnement

L'effluent hydroisomérisé est ensuite avantageusement soumis au moins en partie, et de préférence en totalité, à une ou plusieurs séparations.

L'étape de fractionnement peut comprendre une séparation flash permettant de séparer les gaz du liquide et/ou une distillation atmosphérique. De préférence l'étape du fractionnement comprend une distillation atmosphérique. Le but de cette étape est de séparer les gaz du liquide, et notamment, de récupérer les gaz riches en hydrogène pouvant contenir également des légers tels que la coupe C$_1$ - C$_4$, une coupe essence (150 °C⁻), et au moins une coupe distillats moyens (150°C⁺) contenant du kérosène et/ou du gazole.

La valorisation de la coupe essence (ou naphta) n'est pas l'objet de la présente invention, mais cette coupe peut avantageusement être envoyée dans une unité de vapocraquage pour la production d'hydrogène ou de reformage catalytique. L'hydrogène ainsi produit peut être injecté dans l'étape d'hydrotraitement et/ou d'hydroisomérisation optionnelle.

La coupe distillats moyens qui représente les bases carburants recherchées peut comprendre une coupe contenant le gazole et le kérosène ou les deux coupes peuvent être récupérés séparément. Ces produits sont à base de sources renouvelables et ne contiennent pas de composés soufrés.

Une partie au moins de la ou des coupes distillats moyens peut être recyclée dans l'étape d'hydrotraitement comme recycle.

Selon une variante, au moins une partie de la fraction 150°C⁺ peut être recyclée dans l'étape d'hydroisomérisation. Ainsi, cette fraction est resoumise à l'isomérisation ce qui permet d'améliorer les propriétés à froid.

Selon une autre variante, au moins une partie de la fraction 300°C⁺ peut être recyclée dans l'étape d'hydroisomérisation. Ainsi, cette fraction est resoumise à l'isomérisation ce qui permet de valoriser cette coupe en produits plus légers et d'améliorer les propriétés à froid.

Selon une autre variante, une partie au moins de la fraction 150°C⁺ peut être recyclée dans l'étape d'hydrotraitement.

Le gaz contenant l'hydrogène (13) qui a été séparé lors de l'étape de séparation issue du procédé d'hydrodésoxygénation selon l'invention et/ou de l'étape optionnelle d'hydroisomérisation, est, si nécessaire, avantageusement au moins en partie traité pour réduire sa teneur en légers (C$_1$ à C$_4$). De même, il subit avantageusement un ou plusieurs traitements de purification intermédiaire, de préférence au moins un lavage avec au moins une amine, suivi de préférence d'une méthanation et/ou d'une séparation par adsorption modulée en pression (en anglais Pressure Swing Adsorption ou (PSA)), avant d'être recyclé.

On peut avantageusement introduire l'hydrogène de recycle, de préférence purifié, soit avec la charge entrant dans l'étape d'hydrodésoxygénation selon l'invention et/ou dans l'étape d'hydroisomérisation optionnelle, soit sous forme d'hydrogène de trempe entre les lits de catalyseurs d'hydrodésoxygénation selon l'invention et/ou d'hydroisomérisation.

Il est également avantageux d'additionner au gaz de recyclage une certaine quantité de composé soufré (tel que par exemple le DMDS, di-méthyl disulfure), qui par décomposition thermique produit de l'hydrogène sulfuré H$_2$S.

Ce dispositif permet de maintenir si nécessaire le catalyseur de l'étape d'hydrotraitement et/ou de l'hydroisomérisation optionnelle (dans le cas d'un catalyseur actif sous forme sulfure) à l'état sulfuré.

## EXEMPLE 1 (NON CONFORME A L'INVENTION)

La charge à traiter est une huile de colza, dont les principales caractéristiques se trouvent dans le tableau 1a.

Tableau 1a

| Caractéristiques de la charge traitée (huile végétale de colza) | |
|---|---|
| Charge traitée | Huile de colza |
| Densité à 15°C (kg/m$^3$) | 920.0 |
| Oxygène (% poids) | 11.0 |
| Hydrogène (% poids) | 11.4 |
| Soufre (ppm poids) | 4 |
| Azote (ppm poids) | 23 |
| Phosphore (ppm poids) | 10 |

On souhaite traiter 100 g/h de cette charge dans un réacteur d'hydrotraitement constitué de 3 lits catalytiques.

Chaque zone catalytique est constituée d'un lit de catalyseur. Le catalyseur utilisé est identique dans les trois zones catalytiques de l'étape d'hydrotraitement et comprend 4% poids de NiO, 21% poids de MoO$_3$ et 5% poids de P$_2$O$_5$ supporté sur une alumine gamma. Ledit catalyseur présente un rapport atomique Ni/Mo égal à 0.4.

Les catalyseurs supportés sont préparés par imprégnation à sec des précurseurs oxydes en solution puis sulfurés in-situ préalablement au test, à une température de 350°C, à l'aide d'une charge gazole de distillation directe additivée de 2% en poids de soufre ex-diméthyldisulfure (DMDS). Après sulfuration in-situ dans l'unité sous pression, la charge issue d'une source renouvelable constituée par l'huile de colza décrite dans le tableau 1a, est envoyée dans chacune des trois zones catalytiques. Afin de maintenir le catalyseur à l'état sulfure, on ajoute 50 ppm poids de soufre sous forme de DMDS à la charge. Dans les conditions de réactions, le DMDS est totalement décomposé pour former du méthane et de l'H$_2$S.

La méthode de préparation des catalyseurs ne limite pas la portée de l'invention.

La quantité de recycle liquide utilisé, et injecté avec la charge brute sur la zone Z1, est de 100 g/h, ce qui conduit à un taux de recycle total massique de 1.0.

La pression opératoire totale est de 50 bar rel (5 MPa rel). On mélange à chacun des flux de charge, de l'hydrogène pur, avec un débit tel qu'en entrée de chacune des zones catalytiques, on a un ratio H$_2$/charge brute de 700 Nm$^3$/m$^3$.

Le tableau 1b indique les débits de chacun des trois flux de charge, ainsi que les rapport diluant/charge pour chacune des 3 zones catalytiques.

Tableau 1b

| Conditions opératoires de la section hydrotraitement Et caractéristiques de l'effluent produit | |
|---|---|
| Débit charge zone Z1 (F1) (g/h) | 25.0 |
| Débit charge zone Z2 (F2) (g/h) | 30.0 |
| Débit charge zone Z3 (F3) (g/h) | 45.0 |
| Débit total charge (F) (g/h) | 100.0 |
| Débit de recycle liquide (R) (g/h) | 100.0 |
| Rapport diluant / charge zone Z1 (g/g) | 4.0 |
| Rapport diluant / charge zone Z2 (g/g) | 4.0 |
| Rapport diluant / charge zone Z3 (g/g) | 3.5 |
| Température entrée zone Z1 (°C) | 203 |
| Température sortie zone Z3 (°C) | 284 |
| **Caractéristiques effluent produit** Débit d'hydrocarbures produits (g/h) | 86.0 |

(suite)

| Caractéristiques effluent produit | |
|---|---|
| Densité à 15°C (kg/m3) | 790 |
| Oxygène (% poids) | < 0.2 |
| Azote (ppm poids) | 5 |

L'expérience est réalisée ici en maintenant un taux de dilution quasi-identique sur toutes les zones catalytiques, voisin de 4 g de diluant pour 1g de charge brute. L'hydrocarbure produit contient, en sortie de la section hydrotraitement, des traces d'azote (5 ppm poids).

L'hydrocarbure liquide produit précédemment est ensuite injecté dans un réacteur contenant 100 cm$^3$ d'un catalyseur d'hydroisomérisation, composé de NiW/SiAl.

On injecte l'hydrocarbure avec un débit volumique de 100 cm$^3$/g, soit une WH dans la section d'hydroisomérisation de 1.0 h$^{-1}$.

L'étape d'hydroisomérisation est réalisée sur un lit fixe de catalyseur, en utilisant une pression de 50 bar rel (5 MPa rel) et un débit d'hydrogène pur tel que le rapport entre le débit volumique d'hydrogène et le débit volumique d'hydrocarbure liquide est de 700 N m$^3$/m$^3$. On obtient alors en sortie des gaz (C4$^-$), une coupe naphta (C5-150°C), et une coupe kérosène (150°C$^+$). Le tableau 1c fournit les caractéristiques de cette coupe kérosène.

Tableau 1c : Caractéristiques de la coupe kérosène produite

| | |
|---|---|
| Densité à 15°C (kg/m3) | 780.1 |
| Point initial D86 (°C) | 160 |
| Point final 86 (°C) | 305 |
| Azote (ppm poids) | < 0.3 |
| Point de disparition des cristaux (°C) | -5 |
| Point de flash (°C) | 50 |

## EXEMPLE 2 (CONFORME A L'INVENTION)

On traite la même charge brute que dans l'exemple précédent (huile de colza). Le catalyseur ainsi que sa préparation est identique à celui de l'exemple 1. Les conditions opératoires de la section hydrotraitement sont identiques à celles utilisées dans l'exemple 1.

On utilise strictement la même quantité de recycle liquide injecté avec la charge brute sur la première zone de catalyseur, soit 100 g/h, ce qui signifie que le taux de recycle total massique est identique et égal à 1.0.

En revanche, l'opération est menée de telle sorte que sur la première zone catalytique, on ait un très fort taux de dilution entre le recycle et la charge injectée dans la zone catalytique Z1. Ce taux est de 11 g de recycle liquide pour 1g de charge brute injectée en zone Z1. Le tableau 2b indique les débits de chacun des trois flux de charge, ainsi que les rapports diluant/charge brute pour chacune des 3 zones catalytiques.

Tableau 2b

| Conditions opératoires de la section hydrotraitement et caractéristiques de l'effluent produit | |
|---|---|
| Débit charge zone Z1 (F1) (g/h) | 9.0 |
| Débit charge zone Z2 (F2) (g/h) | 36.0 |
| Débit charge zone Z3 (F3) (g/h) | 55.0 |
| Débit total charge (F) (g/h) | 100.0 |
| Débit de recycle liquide (R) (g/h) | 100.0 |
| Rapport diluant / charge zone Z1 (g/g) | 11.1 |
| Rapport diluant / charge zone Z2 (g/g) | 3.0 |
| Rapport diluant / charge zone Z3 (g/g) | 2.6 |
| Température entrée zone Z1 (°C) | 203 |
| Température sortie zone Z3 (°C) | 317 |

(suite)

| Caractéristiques effluent produit | |
|---|---|
| Débit d'hydrocarbures produits (g/h) | 86.0 |
| Densité à 15°C (kg/m3) | 790 |
| Oxygène (% poids) | < 0.2 |
| Azote (ppm poids) | < 0.3 |

En conséquence, une meilleure homogénéité de température est obtenue en sortie de zone Z1. Les proportions de charge injectées dans les zones suivantes sont plus élevées que dans l'exemple 1, et le profil de température s'en trouve modifié, de telle sorte que la teneur résiduelle en azote dans l'hydrocarbure liquide produit par la section hydrotraitement, est inférieure à la limite de détection, soit inférieure à 0.3 ppm poids.

Cet hydrocarbure liquide est ensuite traité dans un réacteur d'hydroisomérisation et sous des conditions opératoires strictement identiques à celles décrites dans l'exemple 1. On obtient alors en sortie des gaz (C4$^-$), une coupe naphta (C5-150°C), et une coupe kérosène (150°C$^+$).

Le tableau 2c fournit les caractéristiques de la coupe kérosène produite dans ces conditions.

Tableau 2c

| Caractéristiques de la coupe kérosène produite | |
|---|---|
| Densité à 15°C (kg/m3) | 764.5 |
| Point initial D86 (°C) | 160 |
| Point final 86 (°C) | 295 |
| Azote (ppm poids) | < 0.3 |
| Point de disparition des cristaux (°C) | -50 |
| Point de flash (°C) | 50 |

On observe que le point de disparition des cristaux de la coupe kérosène produite selon la présente invention répond aux spécifications requérant un point de disparition des cristaux en dessous de -47°C.

**Revendications**

1. Procédé d'hydrotraitement d'une charge issue de sources renouvelables pour produire des hydrocarbures paraffiniques en présence d'hydrogène en excès de la consommation d'hydrogène théorique et à des conditions d'hydrotraitement dans un réacteur à lit fixe ayant plusieurs zones catalytiques disposées en série et comprenant un catalyseur d'hydrotraitement, **caractérisé en ce que** :

   a) le flux de la charge totale F est divisé en un certain nombre de différents flux partiels F1 à Fn égal au nombre de zones catalytiques n dans le réacteur, le premier flux partiel F1 est injecté dans la première zone catalytique, le deuxième flux partiel F2 est injecté dans la deuxième zone catalytique et ainsi de suite, si n est supérieur à 2, les différents flux partiels sont injectés dans les zones catalytiques successives dans des proportions croissantes de telle manière que F1/F soit inférieur ou égal à F2/F, lui-même inférieur ou égale à F3/F et ainsi de suite jusqu'à F(n-1)/F soit inférieur ou égal à Fn/F, de telle sorte que les températures de sortie des différentes zones suivent un profil montant, pour produire un effluent contenant les hydrocarbures paraffiniques,
   b) ledit effluent est soumis à au moins une étape de séparation permettant de séparer une fraction gazeuse contenant l'hydrogène, le CO, le $CO_2$, l'$H_2S$, l'eau et les gaz légers et une fraction liquide contenant les hydrocarbures paraffiniques,
   c) au moins une partie de ladite fraction liquide contenant les hydrocarbures paraffiniques est recyclée à la première zone catalytique de telle sorte que le rapport massique entre le flux dudit recycle envoyé dans la première zone catalytique et le flux partiel F1 introduit dans la première zone catalytique soit supérieur ou égal à 10.

2. Procédé selon la revendication précédente dans lequel l'excédent d'hydrogène utilisé dans l'étape d'hydrotraitement est d'au moins 50% de la consommation théorique.

**3.** Procédé selon l'une des revendications précédentes dans lequel le rapport massique entre le flux du recycle envoyé dans la première zone catalytique et le flux total de la charge est inférieur à 1, de préférence inférieur à 0,5.

**4.** Procédé selon l'une des revendications précédentes dans lequel le réacteur comprend entre 3 et 10 zones catalytiques, de préférence entre 3 et 6 zones catalytiques.

**5.** Procédé selon l'une des revendications précédentes dans lequel l'hydrotraitement est opéré à une température comprise entre 200 et 400°C, à une pression totale comprise entre 2 MPa et 15 MPa, à une vitesse spatiale horaire comprise entre 0,1 h$^{-1}$ et 5 h$^{-1}$ et en présence d'une quantité totale d'hydrogène mélangée à la charge telle que le ratio hydrogène/charge soit compris entre 300 et 1500 Nm$^3$ d'hydrogène/m$^3$ de charge.

**6.** Procédé selon l'une des revendications précédentes dans lequel le catalyseur d'hydrotraitement est un catalyseur sulfuré qui comprend un ou plusieurs éléments des groupes 6, 8, 9 et 10 de la classification périodique, de préférence le nickel, le molybdène, le tungstène et/ou le cobalt.

**7.** Procédé selon l'une des revendications précédentes dans lequel l'étape de séparation b) est effectuée en une seule étape par un séparateur haute température haute pression opérant sans réduction de pression à une température entre 145°C et 280°C.

**8.** Procédé selon l'une des revendications 1 à 6 dans lequel l'étape de séparation b) comprend une séparation en deux étapes sans réduction de pression, la première séparation étant effectuée entre 145°C et 280°C dans un séparateur à haute température, la deuxième étant effectuée entre 25°C et 100°C dans un séparateur à basse température.

**9.** Procédé selon l'une des revendications précédentes dans lequel les charges issues de sources renouvelables sont choisies parmi les huiles et graisses d'origine végétale ou animale, ou des mélanges de telles charges, contenant des triglycérides et/ou des acides gras libres et/ou des esters.

**10.** Procédé selon l'une des revendications précédentes dans lequel les différents flux partiels de charge sont de nature identique ou différente.

**11.** Procédé selon l'une des revendications précédentes dans lequel les charges issues de sources renouvelables sont co-traitées avec une charge pétrolière de type distillats moyens choisie dans le groupe formé par les gazoles et/ou kérosènes de distillation atmosphérique directe et les gazoles et/ou kérosènes issus de procédés de conversion, ou l'un quelconque de leur mélange.

**12.** Procédé selon l'une des revendications précédentes dans lequel au moins une partie de la fraction liquide contenant les hydrocarbures paraffiniques subit ensuite une étape d'hydroisomérisation en présence d'un catalyseur d'hydroisomérisation, ladite étape d'hydroisomérisation opère à une température comprise entre 150 et 500°C, à une pression comprise entre 1 MPa et 10 MPa, à une vitesse volumique horaire comprise entre 0,1 h$^{-1}$ et 10 h$^{-1}$, à un débit d'hydrogène tel que le rapport volumique hydrogène/hydrocarbures est compris entre 70 et 1000 Nm$^3$/m$^3$ de charge, ledit catalyseur d'hydroisomérisation comprend au moins un métal du groupe VIII et/ou au moins un métal du groupe VIB en tant que fonction hydrodéshydrogénante et au moins un tamis moléculaire ou un support minéral amorphe en tant que fonction hydroisomérisante.

**13.** Procédé selon les revendications 12 dans lequel l'effluent de l'étape d'hydroisomérisation est soumis à une étape de séparation permettant d'obtenir une coupe gazeuse riche en hydrogène, une coupe essence (150 °C$^-$), et au moins une coupe distillats moyens (150°C$^+$) contenant du kérosène et/ou du diesel.

**14.** Procédé selon la revendication 13 dans lequel la fraction 150°C$^+$ issue de la séparation après l'hydroisomérisation est au moins en partie recyclée dans l'étape d'hydroisomérisation.

**15.** Procédé selon l'une des revendications précédentes dans lequel le catalyseur d'hydrotraitement comprend une fonction hydro-déshydrogénante comprenant au moins un métal du groupe VIII et/ou du groupe VIB, pris seul ou en mélange et un support choisi dans le groupe formé par l'alumine, la silice, les silices-alumines, la magnésie, les argiles et les mélanges d'au moins deux de ces minéraux, de préférence l'alumine et de manière très préférée de l'alumine η, δ ou γ.

**16.** Procédé selon l'une des revendications précédentes dans lequel la température à l'entrée de la zone Z1 est supérieure à 180°C et les températures à l'entrée des zones catalytiques suivantes sont supérieures à celle en entrée de la zone précédente et de préférence inférieures à 300°C.

**17.** Procédé selon l'une des revendications précédentes dans lequel les températures à la sortie de chacune des zones catalytiques sont inférieures à 400°C.

**18.** Procédé selon l'une des revendications précédentes dans lequel l'hydrogène utilisé en excès de sorte que le ratio entre le débit d'hydrogène et le débit de charge totale F est compris entre 300 et 1500 Nm$^3$/m$^3$, de préférence entre 600 et 900 Nm$^3$/m$^3$.

**19.** Procédé selon l'une des revendications précédentes dans lequel l'hydrogène est distribué en différents flux H1, H2, ..., Hn, avec n le nombre de zones catalytiques dans le réacteur, le flux partiel F1 étant mélangé avec le flux H1, le flux partiel F2 étant mélangé avec le flux H2, et ainsi de suite jusqu'à la n-ième zone catalytique, les ratios entre les débits d'hydrogène H1 à Hn ajoutés à chacun des flux partiels F1 à Fn et les débits massiques des flux partiels F1 à Fn étant du même ordre de grandeur pour l'ensemble des zones catalytiques et de sorte que le ratio entre le débit d'hydrogène et le débit de flux partiel est compris entre 300 et 1500 Nm3/m3, de préférence entre 600 et 900 Nm3/m3.

**20.** Procédé selon l'une des revendications précédentes dans lequel l'hydrogène vient d'un appoint en hydrogène et/ou d'un recyclage d'un gaz riche en hydrogène comprenant la fraction gazeuse issue de l'étape de séparation après l'étape d'hydrotraitement et/ou la coupe gazeuse issue de l'étape de fractionnement après l'étape d'hydrohysomérisation optionnelle.

**21.** Procédé selon la revendication précédente dans lequel ledit gaz riche en hydrogène issu de l'étape de séparation après l'étape d'hydrotraitement ou de l'étape de fractionnement après l'étape d'hydrohysomérisation optionnelle subit un ou plusieurs traitements de purification intermédiaire, de préférence au moins un lavage avec au moins une amine, suivi de préférence d'une méthanation et/ou d'une séparation par adsorption modulée en pression (en anglais Pressure Swing Adsorption ou (PSA)), avant d'être recyclé dans le procédé d'hydrotraitement et/ou d'hydoisomérisation.

**Patentansprüche**

**1.** Verfahren zur Hydrobehandlung einer Charge, die aus erneuerbaren Quellen stammt, um paraffinhaltige Kohlenwasserstoffe im Beisein von überschüssigem Wasserstoff aus dem theoretischen Wasserstoffverbrauch und bei Hydrobehandlungsbedingungen in einem Festbettreaktor zu erzeugen, der mehrere katalytische Zonen, die in Serie angeordnet sind, aufweist und einen Katalysator zur Hydrobehandlung umfasst, **dadurch gekennzeichnet, dass**:

a) der Strom der Gesamtcharge F in eine gewisse Anzahl verschiedener Teilströme F1 bis Fn gleich der Anzahl von katalytischen Zonen n im Reaktor aufgeteilt wird, der erste Teilstrom F1 in die erste katalytische Zone injiziert wird, der zweite Teilstrom F2 in die zweite katalytische Zone injiziert wird, und so weiter, wenn n größer als 2 ist,
die verschiedenen Teilströme in die aufeinanderfolgenden katalytischen Zonen in wachsenden Anteilen injiziert werden, so dass F1/F kleiner oder gleich F2/F, seinerseits kleiner oder gleich F3/F und so weiter bis F(n-1)/F kleiner oder gleich Fn/F ist, so dass die Ausgangstemperaturen der verschiedenen Zonen einem aufsteigenden Profil folgen, um einen Abfluss zu erzeugen, der die paraffinhaltigen Kohlenwasserstoffe enthält,
b) der Abfluss mindestens einem Trennungsschritt unterzogen wird, der es ermöglicht, eine gasförmige Fraktion, die den Wasserstoff, das CO, das $CO_2$, das $H_2S$, das Wasser und die leichten Gase enthält, und eine flüssige Fraktion, die die paraffinhaltigen Kohlenwasserstoffe enthält, zu trennen,
c) mindestens ein Teil der flüssigen Fraktion, die die paraffinhaltigen Kohlenwasserstoffe enthält, an der ersten katalytischen Zone wiederverwertet wird, so dass das Massenverhältnis zwischen der wiederverwerteten Fraktion, die in die erste katalytische Zone geschickt wird, und dem Teilstrom F1, der in die erste katalytische Zone eingeführt wird, größer oder gleich 10 ist.

**2.** Verfahren nach dem vorhergehenden Anspruch, bei dem der Wasserstoffüberschuss, der in dem Hydrobehandlungsschritt verwendet wird, mindestens 50 % des theoretischen Verbrauchs ausmacht.

3. Verfahren nach einem der vorhergehenden Ansprüche, bei dem das Massenverhältnis zwischen dem Strom der wiederverwerteten Fraktion, die in die erste katalytische Zone geschickt wird, und dem Gesamtstrom der Charge kleiner als 1, vorzugsweise kleiner als 0,5 ist.

4. Verfahren nach einem der vorhergehenden Ansprüche, bei dem der Reaktor zwischen 3 und 10 katalytische Zonen, vorzugsweise zwischen 3 und 6 katalytische Zonen umfasst.

5. Verfahren nach einem der vorhergehenden Ansprüche, bei dem die Hydrobehandlung bei einer Temperatur zwischen 200 und 400 °C, bei einem Gesamtdruck zwischen 2 MPa und 15 MPa, bei einer stündlichen Raumgeschwindigkeit zwischen 0,1 h$^{-1}$ und 5 h$^{-1}$ und im Beisein einer derartigen Gesamtwasserstoffmenge, die zu der Charge gemischt wird, dass das Wasserstoff/Charge-Verhältnis zwischen 300 und 1500 Nm$^3$ Wasserstoff/m$^3$ Charge beträgt, durchgeführt wird.

6. Verfahren nach einem der vorhergehenden Ansprüche, bei dem der Katalysator zur Hydrobehandlung ein sulfidierter Katalysator ist, der ein oder mehrere Elemente der Gruppen 6, 8, 9 und 10 des Periodensystems, vorzugsweise Nickel, Molybdän, Wolfram und/oder Kobalt, umfasst.

7. Verfahren nach einem der vorhergehenden Ansprüche, bei dem der Trennungsschritt b) in einem Schritt durch einen Hochtemperatur-Hochdruck-Separator erfolgt, der ohne Druckreduktion bei einer Temperatur zwischen 145 °C und 280 °C arbeitet.

8. Verfahren nach einem der Ansprüche 1 bis 6, bei dem der Trennungsschritt b) eine Trennung in zwei Schritten ohne Druckreduktion umfasst, wobei die erste Trennung zwischen 145 °C und 280 °C in einem Hochtemperatur-Separator durchgeführt wird, wobei der zweite Schritt zwischen 25 °C und 100°C in einem Niedertemperatur-Separator durchgeführt wird.

9. Verfahren nach einem der vorhergehenden Ansprüche, bei dem die aus erneuerbaren Quellen stammenden Chargen ausgewählt sind unter den Ölen und Fetten pflanzlichen oder tierischen Ursprungs oder den Gemischen solcher Chargen, die Triglyceride und/oder freie Fettsäuren und/oder Ester enthalten.

10. Verfahren nach einem der vorhergehenden Ansprüche, bei dem die verschiedenen Teilchargenströme identischer oder unterschiedlicher Natur sind.

11. Verfahren nach einem der vorhergehenden Ansprüche, bei dem die aus erneuerbaren Quellen stammenden Chargen mit einer Erdölcharge vom Typ Mitteldestillate gleichzeitig behandelt werden, die in der Gruppe ausgewählt ist, die von Diesel und/oder Kerosin aus direkter atmosphärischer Destillation und Diesel und/oder Kerosin aus Umwandlungsprozessen oder einer ihrer Mischungen gebildet ist.

12. Verfahren nach einem der vorhergehenden Ansprüche, bei dem mindestens ein Teil der flüssigen Fraktion, die die paraffinhaltigen Kohlenwasserstoffe enthält, sodann einem Schritt der Hydroisomerisation im Beisein eines Katalysators zur Hydroisomerisation unterzogen wird, wobei der Schritt der Hydroisomerisation bei einer Temperatur zwischen 150 und 500 °C, bei einem Druck zwischen 1 MPa und 10 MPa, bei einer stündlichen volumenbezogenen Geschwindigkeit zwischen 0,1 h$^{-1}$ und 10 h$^{-1}$, bei einer derartigen Wasserstoffmenge, dass das Volumenverhältnis Wasserstoff/Kohlenwasserstoffe zwischen 70 und 1000 Nm$^3$/m$^3$ Charge beträgt, durchgeführt wird, wobei der Katalysator zur Hydroisomerisation mindestens ein Metall der Gruppe VIII und/oder mindestens ein Metall der Gruppe VIB als hydrierende-dehydrierende Funktion und mindestens ein Molekularsieb oder einen amorphen mineralischen Träger als hydroisomierisierende Funktion umfasst.

13. Verfahren nach den Ansprüchen 12, bei dem der Abfluss aus dem Hydroisomerisationsschritt einem Trennungsschritt unterzogen wird, der es ermöglicht, eine mit Sauerstoff angereicherte gasförmige Fraktion, eine Benzinfraktion (150 °C$^-$) und mindestens eine Mitteldestillatfraktion (150 °C$^+$), die Kerosin und/oder Diesel enthält, zu erhalten.

14. Verfahren nach Anspruch 13, bei dem die aus der Trennung nach der Hydroisomerisation stammende Fraktion 150 °C$^+$ zumindest teilweise in dem Hydroisomerisationsschritt wiederverwertet wird.

15. Verfahren nach einem der vorhergehenden Ansprüche, bei dem der Katalysator zur Hydrobehandlung eine hydrierende-dehydrierende Funktion umfasst, umfassend mindestens ein Metall der Gruppe VIII und/oder der Gruppe VIB alleine oder im Gemisch und einen Träger, der in der Gruppe ausgewählt ist, die von Aluminiumoxid, Siliziumoxid, Silizium-Aluminiumoxiden, Magnesium, Ton und den Gemischen von mindestens zwei dieser Mineralien, vorzugsweise Aluminiumoxid und auf besonders bevorzugte Weise Aluminiumoxid $\eta$, $\delta$ oder $\Upsilon$, gebildet ist.

16. Verfahren nach einem der vorhergehenden Ansprüche, bei dem die Temperatur am Eingang der Zone Z1 höher als 180°C ist, und die Temperaturen am Eingang der folgenden katalytischen Zonen höher als jene am Eingang der vorhergehenden Zone und vorzugsweise niedriger als 300 °C sind.

17. Verfahren nach einem der vorhergehenden Ansprüche, bei dem die Temperaturen am Ausgang jeder der katalytischen Zonen niedriger als 400 °C sind.

18. Verfahren nach einem der vorhergehenden Ansprüche, bei dem der Wasserstoff im Überschuss eingesetzt wird, so dass das Verhältnis zwischen der Wasserstoffmenge und der Menge der Gesamtcharge F zwischen 300 und 1500 $Nm^3/m^3$, vorzugsweise zwischen 600 und 900 $Nm^3/m^3$ beträgt.

19. Verfahren nach einem der vorhergehenden Ansprüche, bei dem der Wasserstoff in verschiedene Ströme H1, H2, ... Hn verteilt wird, wobei n die Anzahl von katalytischen Zonen im Reaktor ist, wobei der Teilstrom F1 mit dem Strom H1 gemischt wird, wobei der Teilstrom F2 mit dem Strom H2 gemischt wird, und so weiter, bis zur n-ten katalytischen Zone, wobei die Verhältnisse zwischen den Wasserstoffmengen H1 bis Hn, die zu jedem der Teilströme F1 bis Fn hinzugefügt werden, und dem jeweiligen Massendurchfluss der Teilströme F1 bis Fn für die Gesamtheit der katalytischen Zonen von derselben Größenordnung ist, und dass das Verhältnis zwischen der Wasserstoffmenge und der Teilstromdurchflussmenge zwischen 300 und 1500 $Nm^3/m^3$, vorzugsweise zwischen 600 und 900 $Nm^3/m^3$ beträgt.

20. Verfahren nach einem der vorhergehenden Ansprüche, bei dem der Wasserstoff von einer Wasserstoffzufuhr und/oder einer Wiederverwertung eines mit Wasserstoff angereicherten Gases stammt, umfassend die gasförmige Fraktion, die aus dem Trennungsschritt nach dem Hydrobehandlungsschritt stammt, und/oder die gasförmige Fraktion, die aus dem Fraktionierungsschritt nach dem optionalen Hydroisomerisationsschritt stammt.

21. Verfahren nach dem vorhergehenden Anspruch, bei dem das mit Wasserstoff angereicherte Gas, das aus dem Trennungsschritt nach dem Hydrobehandlungsschritt oder aus dem Fraktionierungsschritt nach dem optionalen Hydroisomerisationsschritt stammt, einer oder mehreren Zwischenreinigungsbehandlungen unterzogen wird, vorzugsweise mindestens einem Waschen mit mindestens einem Amin, vorzugsweise gefolgt von einer Methanisierung und/oder einer Trennung durch druckmodulierte Adsorption (auf Englisch Pressure Swing Adsorption oder (PSA)), unterzogen wird, bevor es in dem Hydrobehandlungs- und/oder Hydroisomerisationsverfahren wiederverwertet wird.

**Claims**

1. A process for the hydrotreatment of a feed originating from renewable sources in order to produce paraffinic hydrocarbons in the presence of hydrogen in excess of the theoretical hydrogen consumption and under hydrotreatment conditions in a fixed bed reactor having a plurality of catalytic zones disposed in series and comprising a hydrotreatment catalyst, **characterized in that**:

   a) the total feed flow F is divided into a certain number of different part flows F1 to Fn equal to the number of catalytic zones n in the reactor, the first part flow F1 is injected into the first catalytic zone, the second part flow F2 is injected into the second catalytic zone and so on, if n is greater than 2;
   the various part flows are injected into successive catalytic zones in increasing proportions such that F1/F is less than or equal to F2/F, which itself is less than or equal to F3/F and so on until F(n-1)/F is less than or equal to Fn/F, such that the outlet temperatures for the various zones follow a rising profile, in order to produce an effluent containing paraffinic hydrocarbons;
   b) said effluent undergoes at least one separation step in order to separate a gaseous fraction containing hydrogen, CO, $CO_2$, $H_2S$, water and light gases and a liquid fraction containing the paraffinic hydrocarbons;
   c) at least a portion of said liquid fraction containing paraffinic hydrocarbons is recycled to the first catalytic zone such that the weight ratio between the flow of said recycle sent to the first catalytic zone and the part flow F1 introduced into the first catalytic zone is 10 or more.

2. A process according to the preceding claim, wherein the excess hydrogen used in the hydrotreatment step is at least 50% of the theoretical consumption.

3. A process according to one of the preceding claims, wherein the weight ratio between the recycle flow sent to the first catalytic zone and the total flow of the feed is less than 1, preferably less than 0.5.

4. A process according to one of the preceding claims, wherein the reactor comprises in the range 3 to 10 catalytic zones, preferably in the range 3 to 6 catalytic zones.

5. A process according to one of the preceding claims, wherein the hydrotreatment is operated at a temperature in the range 200°C to 400°C, a total pressure in the range 2 MPa to 15 MPa, at an hourly space velocity in the range 0.1 $h^{-1}$ to 5 $h^{-1}$ and in the presence of a total quantity of hydrogen mixed with the feed such that the hydrogen/feed ratio is in the range 300 to 1500 $Nm^3$ of hydrogen/$m^3$ of feed.

6. A process according to one of the preceding claims, wherein the hydrotreatment catalyst is a sulphurized catalyst which comprises one or more elements from groups 6, 8, 9 and 10 of the periodic classification of the elements, preferably nickel, molybdenum, tungsten and/or cobalt.

7. A process according to one of the preceding claims, wherein the separation step b) is carried out in a single step using a high temperature high pressure separator operating without pressure reduction at a temperature in the range 145°C to 280°C.

8. A process according to one of claims 1 to 6, wherein the separation step b) comprises separation in two stages without pressure reduction, the first separation being carried out between 145°C and 280°C in a high temperature separator, the second being carried out in the range 25°C to 100°C in a low temperature separator.

9. A process according to one of the preceding claims, wherein the feeds originating from renewable sources are selected from oils and fats of vegetable or animal origin, or mixtures of said feeds, containing triglycerides and/or free fatty acids and/or esters.

10. A process according to one of the preceding claims, wherein the various part flows of the feed are identical or different in nature.

11. A process according to one of the preceding claims, wherein the feeds from renewable sources are co-treated with an oil feed of the middle distillates type selected from the group formed by straight run gas oils and/or kerosenes and gas oils and/or kerosenes derived from conversion processes, or any mixture thereof.

12. A process according to one of the preceding claims, wherein at least a portion of the liquid fraction containing the paraffinic hydrocarbons subsequently undergoes a hydroisomerization step carried out in the presence of a hydroisomerization catalyst, said hydroisomerization being operated at a temperature in the range 150°C to 500°C, at a pressure in the range 1 MPa to 10 MPa, at an hourly space velocity in the range 0.1 $h^{-1}$ to 10 $h^{-1}$, at a hydrogen flow rate such that the volume ratio of hydrogen/hydrocarbons is in the range 70 to 1000 $Nm^3/m^3$ of feed, said hydroisomerization catalyst comprising at least one metal from group VIII and/or at least one metal from group VIB as a hydrodehydrogenating function, and at least one molecular sieve or an amorphous mineral support as a hydroisomerizing function.

13. A process according to claim 12, wherein the effluent from the hydroisomerization step undergoes a separation step in order to obtain a hydrogen-rich gaseous cut, a gasoline cut (150°C$^-$), and at least one middle distillates cut (150°C$^+$) containing kerosene and/or diesel.

14. A process according to claim 13, wherein at least a portion of the 150°C$^+$ fraction derived from the separation step after the hydroisomerization step is recycled to the hydroisomerization step.

15. A process according to one of the preceding claims, wherein the hydrotreatment catalyst comprises a hydrodehydrogenating function comprising at least one metal from group VIII and/or group VIB, used alone or as a mixture, and a support selected from the group formed by alumina, silica, silica-aluminas, magnesia, clays and mixtures of at least two of these minerals, preferably alumina, highly preferably $\eta$, $\delta$ or $\gamma$ alumina.

16. A process according to one of the preceding claims, wherein the temperature at the inlet to zone Z1 is greater than 180°C and the temperatures at the inlet to the subsequent catalytic zones are higher than that at the inlet to the preceding zone and preferably less than 300°C.

**17.** A process according to one of the preceding claims, wherein the temperatures at the outlet from each of the catalytic zones are less than 400°C.

**18.** A process according to one of the preceding claims, wherein hydrogen is used in excess such that the ratio between the flow rate of hydrogen and the flow rate of unrefined feed is in the range 300 to 1500 $Nm^3/m^3$, preferably in the range 600 to 900 $Nm^3/m^3$.

**19.** A process according to one of the preceding claims, wherein hydrogen is distributed as different flows H1, H2, ..., Hn, wherein n is the catalytic zones number in the reactor, wherein the part flow F1 is mixed with the flow H1, the part flow F2 is mixed with the flow H2, and so on to the $n^{th}$ catalytic zone, wherein the ratios between the hydrogen flows H1 to Hn, added to each of said part flows F1 to Fn, and the part flow rates F1, ..., Fn are of the same order of magnitude for the series of catalytic zones, and such that the ratio between the hydrogen flow rate and the part flow rate being is in the range 300 to 1500 $Nm3/m^3$, preferably in the range 600 to 900 $Nm^3/m^3$.

**20.** A process according to one of the preceding claims, wherein hydrogen derives from a makeup of hydrogen and/or from a recycle of hydrogen-rich gas from the separation step after the hydrotreatment step or from the fractionation step after the optional hydroisomerization step.

**21.** A process according to one of the preceding claims, wherein said hydrogen-rich gas obtained from the separation step after the hydrotreatment step or from the fractionation step after the optional hydroisomerization step undergone one or more intermediate purification treatments, preferably at least one wash with at least one amine, preferably followed by methanation and/or separation by pressure swing adsorption, PSA, before being recycled to the hydrotreatment and/or hydroisomerization process

Figure 1

EP 2 468 838 B1

Figure 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1741768 A
- EP 1741768 A1
- US 20090318737 A
- EP 2226375 A
- FR 2943071
- FR 2940144
- US 7070745 B

- EP 46504 A
- EP 1702888 A
- FR 2882744
- FR 2911866
- EP 65400 A
- EP 77624 A

**Littérature non-brevet citée dans la description**

- **SUN et al.** *Catalysis Today,* 2003, vol. 86, 173

- **W. M MEIER ; D. H. OISON ; CH. BAERLOCHER.** Atlas of Zeolite Structure Types. Elsevier, 2001